# EUROPEAN PATENT APPLICATION

(11) **EP 4 398 161 A1**
(43) Date of publication of application: **10.07.2024**
(21) Application number: 22863627.0
(22) Date of filing: 02.09.2022
(51) Int. Cl.: G06N 20/20, H04W 40/02

(54) **MACHINE LEARNING MODEL PROCESSING METHOD AND APPARATUS, AND STORAGE MEDIUM**

(30) Priority: 02.09.2021 CN 202111028834
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2022/116785
(87) International publication number: WO 2023/030493

(57) **Abstract**

The present disclosure provides a machine learning model processing method and apparatus, and a storage medium. A UE creates a local machine learning model for a target application in advance according to a global machine learning model provided by a first network function entity, determines local training data related to the target application, trains the local machine learning model according to the local training data, and sends local model parameters of the trained local machine learning model to the first network function entity, so that the first network function entity updates the global machine learning model. In this way, federated learning can be realized between the UE and the first network function entity for providing the model, and the performance of sharing, transmitting and training machine learning models between the UE and the network is improved, thus meeting the rapidly developing communication services and application demands.

## Description

This disclosure claims priority to Chinese Patent Application No. 202111028834.X, entitled "MACHINE LEARNING MODEL PROCESSING METHOD AND APPARATUS, AND STORAGE MEDIUM" and filed with the China National Intellectual Property Administration on September 2, 2021, the entire content of which is incorporated hereby by reference in its entirety.

### TECHNICAL FIELD

The present disclosure relates to the field of communication technology, and in particular, to a machine learning model processing method and apparatus, and a storage medium.

### BACKGROUND

In order to realize intelligent data analysis and control of mobile communication networks, the Network Data Analytics Function (Network Data Analytics Function, NWDAF) is introduced in 5G networks. NWDAF is based on Artificial Intelligence (Artificial Intelligence, AI) algorithms and provides network data analysis services for other network functional entities through interaction with other network functional entities.

Federated learning can be performed between a NWDAF and other NWDAFs. Federated learning is a machine learning framework that can effectively help multiple NWDAFs perform data usage and machine learning modeling to obtain optimized machine learning (Machine Learning, ML) models while meeting the requirements of user privacy protection and data security. Existing NWDAF-involved federated learning approaches can only be implemented between NWDAF entities and are not suitable for rapidly developing communication services and application demands.

### SUMMARY

The present disclosure provides a machine learning model processing method and apparatus, and a storage medium, to implement federated learning between a UE and a first network function entity for providing a model.

In a first aspect, the present disclosure provides a machine learning model processing method, which is applied to a user equipment UE and includes:
determining local training data related to a target application;
training, according to the local training data, a local machine learning model for the target application, to obtain local model parameters of the trained local machine learning model, where the local machine learning model is obtained based on a global machine learning model trained by a first network function entity; and
sending the local model parameters to the first network function entity, where the local model parameters are used to update the global machine learning model.

Optionally, the method further includes:
obtaining, from the first network function entity, a global model parameter of the updated global machine learning model, where the global model parameter is used to update the trained local machine learning model;
where the global model parameter is obtained by the first network function entity by updating the global machine learning model using the local model parameters sent by at least one UE.

Optionally, the sending the local model parameters to the first network function entity includes:
sending, through a user plane, model update information carrying the local model parameters, to an application function AF entity, so that the model update information is sent to the first network function entity through the AF entity; or,
sending, through the user plane, the model update information carrying the local model parameters, to the application function AF entity, where the AF entity sends the model update information to the first network function entity through a network exposure function NEF entity; or,
sending, through a non-access stratum, the model update information carrying the local model parameters, to an access and mobility management function AMF entity, so that the model update information is sent to the first network function entity through the AMF entity.

Optionally, the model update information further includes any one or more of the following: a UE ID, an application ID, a first network function entity ID, for the AF entity or the AMF entity to determine the first network function entity and/or the global machine learning model.

Optionally, the obtaining, from the first network function entity, the global model parameter of the updated global machine learning model includes:
receiving a model update response sent by the AF entity or the AMF entity, where the model update response includes information on the global model parameter of the updated global machine learning model.

Optionally, the obtaining the local machine learning model based on the global machine learning model trained by the first network function entity includes:
obtaining, from the first network function entity, a first model file of the global machine learning model; and
creating the local machine learning model based on the first model file.

Optionally, the obtaining, from the first network function entity, the first model file of the global machine learning model includes:
sending, to the first network function entity, model obtaining information carrying a UE ID and/or model description information; and
obtaining, from the first network function entity, information on the first model file of the global machine learning model which is provisioned based on the model obtaining information.

Optionally, the sending, to the first network function entity, the model obtaining information carrying the UE ID and/or the model description information includes:
sending, through a user plane, the model obtaining information carrying the UE ID and/or the model description information, to an AF entity, so that the model obtaining information is sent to the first network function entity through the AF entity according to the UE ID and/or the model description information; or,
sending, through the user plane, the model obtaining information carrying the UE ID and/or the model description information, to the AF entity, where the AF entity sends the model obtaining information to the first network function entity through an NEF entity according to the UE ID and/or the model description information; or,
sending, through a non-access stratum, the model obtaining information carrying the UE ID and/or the model description information, to an AMF entity, so that the model obtaining information is sent to the first network function entity through the AMF entity according to the UE ID and/or the model description information.

Optionally, the obtaining, from the first network function entity, the first model file of the global machine learning model includes:
receiving a model obtaining response sent by an AF entity or an AMF entity, where the model obtaining response includes the information on the first model file, and is used to obtain the first model file according to the information on the first model file.

Optionally, the model description information includes at least one of the following:
an application ID, an application feature ID, time information, location information, and other model characteristic information.

In a second aspect, the present disclosure provides a machine learning model processing method, which is applied to an AF entity and includes:
receiving model update information carrying the local model parameters sent by a UE through a user plane, where the local machine learning model is a global machine learning model that a first network function entity provides to the UE in advance; and
sending the model update information to the first network function entity, where the local model parameters are used to update the global machine learning model.

Optionally, the method further includes:
obtaining, from the first network function entity, information on a global model parameter of the updated global machine learning model, where the global model parameter is used to update a trained local machine learning model; and
sending, through the user plane, a model update response to the UE, where the model update response includes information on the global model parameter;
where the global model parameter is obtained by the first network function entity by updating the global machine learning model using the local model parameters sent by at least one UE.

Optionally, the sending the model update information to the first network function entity includes:
directly sending the model update information to the first network function entity if the AF entity is a trusted AF entity; or
sending, through an NEF entity, the model update information to the first network function entity if the AF entity is an untrusted AF entity.

Optionally, the obtaining, from the first network function entity, the information on the global model parameter of the updated global machine learning model includes:
obtaining, from the first network function entity directly or through an NEF entity, the information on the global model parameter of the updated global machine learning model.

Optionally, before the receiving the model update information carrying the local model parameters sent by the UE through the user plane, the method further includes:
receiving model obtaining information carrying a UE ID and/or model description information sent by the UE through the user plane;
sending the model obtaining information to the first network function entity, according to the UE ID and/or the model description information; and
obtaining, from the first network function entity, information on a first model file of the global machine learning model and sending, through the user plane, the information on the first model file of the global machine learning model to the UE.

Optionally, the sending the model obtaining information to the first network function entity, according to the UE ID and/or the model description information includes:
if the AF entity is a trusted AF entity, selecting the first network function entity that serves the UE and/or that can provide the global machine learning model that satisfies the model description information, and sending the model obtaining information to the first network function entity; or,
if the AF entity is an untrusted AF entity, sending the model obtaining information to an NEF entity, selecting, by the NEF entity, the first network function entity that serves the UE and/or that can provide the global machine learning model that satisfies the model description information, and sending the model obtaining information to the first network function entity.

Optionally, the obtaining, from the first network function entity, the information on the first model file of the global machine learning model and sending, through the user plane, the information on the first model file of the global machine learning model to the UE includes:
obtaining, from the first network function entity directly or through an NEF entity, the information on the first model file of the global machine learning model; and
sending, through the user plane, a model obtaining response to the UE, where the model obtaining response includes the information on the first model file, and is used to obtain the first model file according to the information on the first model file.

In a third aspect, the present disclosure provides a machine learning model processing method, which is applied to a first network function entity for providing a model and includes:
obtaining local model parameters of a trained local machine learning model sent by a user equipment UE, where the local machine learning model is obtained based on a global machine learning model trained by the first network function entity; and
updating, based on the local model parameters, the global machine learning model.

Optionally, after updating, based on the local model parameters, the global machine learning model, the method further includes:
sending a global model parameter of the updated global machine learning model to the UE, where the global model parameter is used to update the trained local machine learning model;
where the global model parameter is obtained by the first network function entity by updating the global machine learning model using the local model parameters sent by at least one UE.

Optionally, before the obtaining the local model parameters of the trained local machine learning model sent by the user equipment UE, the method further includes:
sending information on a first model file of the global machine learning model to the UE, so that the UE creates the local machine learning model according to the first model file.

In a fourth aspect, the present disclosure provides a user equipment, including a memory, a transceiver, and a processor,
the memory is configured to store a computer program; the transceiver is configured to send and receive data under a control of the processor; the processor is configured to read the computer program in the memory and perform following operations:
determine local training data related to a target application;
train, according to the local training data, a local machine learning model for the target application, to obtain local model parameters of the trained local machine learning model, where the local machine learning model is obtained based on a global machine learning model trained by a first network function entity; and
send the local model parameters to the first network function entity, where the local model parameters are used to update the global machine learning model.

Optionally, the processor is further configured to:
obtain, from the first network function entity, a global model parameter of the updated global machine learning model, where the global model parameter is used to update the trained local machine learning model;
where the global model parameter is obtained by the first network function entity by updating the global machine learning model using the local model parameters sent by at least one UE.

Optionally, the processor, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, where the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

Optionally, the processor, when obtaining, from the first network function entity, the global model parameter of the updated global machine learning model, is configured to:
receive a model update response sent by the AF entity or the AMF entity, where the model update response includes information on the global model parameter of the updated global machine learning model.

Optionally, the processor, when obtaining the local machine learning model based on the global machine learning model trained by the first network function entity, is configured to:
obtain, from the first network function entity, a first model file of the global machine learning model; and
create the local machine learning model based on the first model file.

Optionally, the processor, when obtaining, from the first network function entity, the first model file of the global machine learning model, is configured to:
send, to the first network function entity, model obtaining information carrying a UE ID and/or model description information; and
obtain, from the first network function entity, information on the first model file of the global machine learning model which is provisioned based on the model obtaining information.

Optionally, the processor, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, where the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

Optionally, the processor, when obtaining, from the first network function entity, the first model file of the global machine learning model, is configured to:
receive a model obtaining response sent by an AF entity or an AMF entity, where the model obtaining response includes the information on the first model file, and is used to obtain the first model file according to the information on the first model file.

In a fifth aspect, the present disclosure provides an AF entity, including a memory, a transceiver, and a processor:
the memory is configured to store a computer program; the transceiver is configured to send and receive data under a control of the processor; the processor is configured to read the computer program in the memory and perform following operations:
receive model update information carrying the local model parameters sent by a UE through a user plane, where the local machine learning model is a global machine learning model that a first network function entity provides to the UE in advance; and
send the model update information to the first network function entity, where the local model parameters are used to update the global machine learning model.

Optionally, the processor is further configured to:
obtain, from the first network function entity, information on a global model parameter of the updated global machine learning model, where the global model parameter is used to update a trained local machine learning model; and
send, through the user plane, a model update response to the UE, where the model update response includes information on the global model parameter;
where the global model parameter is obtained by the first network function entity by updating the global machine learning model using the local model parameters sent by at least one UE.

Optionally, the processor, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

Optionally, the processor, when obtaining, from the first network function entity, the information on the global model parameter of the updated global machine learning model, is configured to:
obtain, from the first network function entity directly or through an NEF entity, the information on the global model parameter of the updated global machine learning model.

Optionally, the processor, before receiving the model update information carrying the local model parameters sent by the UE through the user plane, is further configured to:
receive model obtaining information carrying a UE ID and/or model description information sent by the UE through the user plane;
send the model obtaining information to the first network function entity, according to the UE ID and/or the model description information; and
obtain, from the first network function entity, information on a first model file of the global machine learning model and send, through the user plane, the information on the first model file of the global machine learning model to the UE.

Optionally, the processor, when sending the model obtaining information to the first network function entity, according to the UE ID and/or the model description information, is configured to:
if the AF entity is a trusted AF entity, select the first network function entity that serves the UE and/or that can provide the global machine learning model that satisfies the model description information, and send the model obtaining information to the first network function entity; or,
if the AF entity is an untrusted AF entity, send the model obtaining information to an NEF entity, select, by the NEF entity, the first network function entity that serves the UE and/or that can provide the global machine learning model that satisfies the model description information, and send the model obtaining information to the first network function entity.

Optionally, the processor, when obtaining, from the first network function entity, the information on the first model file of the global machine learning model and sending, through the user plane, the information on the first model file of the global machine learning model to the UE, is configured to:
obtain, from the first network function entity directly or through an NEF entity, the information on the first model file of the global machine learning model; and
send, through the user plane, a model obtaining response to the UE, where the model obtaining response includes the information on the first model file, and is used to obtain the first model file according to the information on the first model file.

In a sixth aspect, the present disclosure provides a first network function entity for providing a model, including a memory, a transceiver, and a processor,
the memory is configured to store a computer program; the transceiver is configured to send and receive data under a control of the processor; the processor is configured to read the computer program in the memory and perform following operations:
obtain local model parameters of a trained local machine learning model sent by a user equipment UE, where the local machine learning model is obtained based on a global machine learning model trained by the first network function entity; and
update, based on the local model parameters, the global machine learning model.

Optionally, the processor, after updating, based on the local model parameters, the global machine learning model, is further configured to:
send a global model parameter of the updated global machine learning model to the UE, where the global model parameter is used to update the trained local machine learning model;
where the global model parameter is obtained by the first network function entity by updating the global machine learning model using the local model parameters sent by at least one UE.

Optionally, the processor, before obtaining the local model parameters of the trained local machine learning model sent by the user equipment UE, is further configured to:
send information on a first model file of the global machine learning model to the UE, so that the UE creates the local machine learning model according to the first model file.

In a seventh aspect, the present disclosure provides a machine learning model processing apparatus, which is applied to a UE and includes:
an obtaining unit configured to determine local training data related to a target application;
a training unit configured to train, according to the local training data, a local machine learning model for the target application, to obtain local model parameters of the trained local machine learning model, where the local machine learning model is obtained based on a global machine learning model trained by a first network function entity; and
a sending unit configured to send the local model parameters to the first network function entity, where the local model parameters are used to update the global machine learning model.

Optionally, the obtaining unit is further configured to and further includes:
obtain, from the first network function entity, a global model parameter of the updated global machine learning model, where the global model parameter is used to update the trained local machine learning model;
where the global model parameter is obtained by the first network function entity by updating the global machine learning model using the local model parameters sent by at least one UE.

Optionally, the sending unit, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, where the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

Optionally, the obtaining unit, when obtaining, from the first network function entity, the global model parameter of the updated global machine learning model, is configured to:
receive a model update response sent by the AF entity or the AMF entity, where the model update response includes information on the global model parameter of the updated global machine learning model.

Optionally, the obtaining unit is further configured to obtain, from the first network function entity, a first model file of the global machine learning model;
the training unit is further configured to create the local machine learning model based on the first model file.

Optionally, the obtaining unit, when obtaining, from the first network function entity, the first model file of the global machine learning model, is configured to:
send, to the first network function entity, model obtaining information carrying a UE ID and/or model description information; and
obtain, from the first network function entity, information on the first model file of the global machine learning model which is provisioned based on the model obtaining information.

Optionally, the sending unit, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, where the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

Optionally, the obtaining unit, when obtaining, from the first network function entity, the first model file of the global machine learning model, is configured to:
receive a model obtaining response sent by an AF entity or an AMF entity, where the model obtaining response includes the information on the first model file, and is used to obtain the first model file according to the information on the first model file.

In an eighth aspect, the present disclosure provides a machine learning model processing apparatus, which is applied to an AF entity and includes:
a receiving unit configured to receive model update information carrying the local model parameters sent by a UE through a user plane, where the local machine learning model is a global machine learning model that a first network function entity provides to the UE in advance; and
a sending unit, configured to send the model update information to the first network function entity, where the local model parameters are used to update the global machine learning model.

Optionally, the device further includes:
an obtaining unit configured to obtain, from the first network function entity, information on a global model parameter of the updated global machine learning model, where the global model parameter is used to update a trained local machine learning model;
the sending unit is further configured to send, through the user plane, a model update response to the UE, where the model update response includes information on the global model parameter;
where the global model parameter is obtained by the first network function entity by updating the global machine learning model using the local model parameters sent by at least one UE.

Optionally, the sending unit, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

Optionally, the obtaining unit, when obtaining, from the first network function entity, the information on the global model parameter of the updated global machine learning model, is configured to:
obtain, from the first network function entity directly or through an NEF entity, the information on the global model parameter of the updated global machine learning model.

Optionally, before receiving the model update information carrying the local model parameters sent by the UE through the user plane, following is further included:
the receiving unit is further configured to receive model obtaining information carrying a UE ID and/or model description information sent by the UE through the user plane;
the sending unit is further configured to send the model obtaining information to the first network function entity, according to the UE ID and/or the model description information;
the obtaining unit is further configured to obtain, from the first network function entity, information on a first model file of the global machine learning model;
the sending unit is further configured to send, through the user plane, the information on the first model file of the global machine learning model to the UE.

Optionally, the sending unit, when sending the model obtaining information to the first network function entity, according to the UE ID and/or the model description information, is configured to:
if the AF entity is a trusted AF entity, select the first network function entity that serves the UE and/or that can provide the global machine learning model that satisfies the model description information, and send the model obtaining information to the first network function entity; or,
if the AF entity is an untrusted AF entity, send the model obtaining information to an NEF entity, select, by the NEF entity, the first network function entity that serves the UE and/or that can provide the global machine learning model that satisfies the model description information, and send the model obtaining information to the first network function entity.

Optionally, the obtaining unit, when obtaining, from the first network function entity, the information on the first model file of the global machine learning model and sending, through the user plane, the information on the first model file of the global machine learning model to the UE, is configured to:
obtain, from the first network function entity directly or through an NEF entity, the information on the first model file of the global machine learning model; and
send, through the user plane, a model obtaining response to the UE, where the model obtaining response includes the information on the first model file, and is used to obtain the first model file according to the information on the first model file.

In a ninth aspect, the present disclosure provides a machine learning model processing apparatus, which is applied to a first network function entity for providing a model and includes:
an obtaining unit configured to obtain local model parameters of a trained local machine learning model sent by a user equipment UE, where the local machine learning model is obtained based on a global machine learning model trained by the first network function entity; and
a model updating unit configured to update, based on the local model parameters, the global machine learning model.

Optionally, the device further includes:
a sending unit configured to send a global model parameter of the updated global machine learning model to the UE, where the global model parameter is used to update the trained local machine learning model;
where the global model parameter is obtained by the first network function entity by updating the global machine learning model using the local model parameters sent by at least one UE.

Optionally, the sending unit, before obtaining the local model parameters of the trained local machine learning model sent by the user equipment UE, is further configured to:
send information on a first model file of the global machine learning model to the UE, so that the UE creates the local machine learning model according to the first model file.

In a tenth aspect, the present disclosure provides a processor-readable storage medium, where the processor-readable storage medium stores a computer program, and the computer program is used to cause the processor to execute the method described in the first aspect, the second aspect, or the third aspect.

In an eleventh aspect, the present disclosure provides a computer program product, including a computer program, where the computer program is used to cause the processor to execute the method described in the first aspect, the second aspect, or the third aspect.

The present disclosure provides a machine learning model processing method and apparatus, and a storage medium. A UE creates a local machine learning model for a target application in advance according to a global machine learning model provided by a first network function entity, determines local training data related to the target application, trains the local machine learning model according to the local training data, and sends local model parameters of the trained local machine learning model to the first network function entity, so that the first network function entity updates the global machine learning model. With embodiments of the present disclosure, federated learning can be realized between the UE and the first network function entity for providing the model, and the performance of sharing, transmitting and training machine learning models between the UE and the network is improved, thus meeting the rapidly developing communication services and application demands.

It should be understood that the content described in the above summary section is not intended to define key or important features of embodiments of the present disclosure, nor is it used to limit the scope of the present disclosure. Other features of the present disclosure will become apparent from the description below.

### BRIEF DESCRIPTION OF DRAWINGS

In order to illustrate the technical solutions of the present disclosure or the prior art more clearly, the drawings required for the description of embodiments or the prior art will be briefly introduced below. Obviously, the drawings in the following description are some embodiments of the present disclosure. Those of ordinary skill in the art can also obtain other drawings based on these drawings without exerting any creative effort.
FIG. 1 is a schematic diagram of an application scenario of a machine learning model processing method provided by an embodiment of the present disclosure.
FIG. 2a is a flow chart of a machine learning model processing method provided by an embodiment of the present disclosure.
FIG. 2b is a flow chart of a machine learning model processing method provided by an embodiment of the present disclosure.
FIG. 3 is a flow chart of a machine learning model processing method provided by another embodiment of the present disclosure.
FIG. 4 is a signaling diagram of a machine learning model processing method provided by another embodiment of the present disclosure.
FIG. 5 is a flow chart of a machine learning model processing method provided by another embodiment of the present disclosure.
FIG. 6 is a signaling diagram of a machine learning model processing method provided by another embodiment of the present disclosure.
FIG. 7 is a flow chart of a machine learning model processing method provided by another embodiment of the present disclosure.
FIG. 8 is a signaling diagram of a machine learning model processing method provided by another embodiment of the present disclosure.
FIG. 9 is a flow chart of a machine learning model processing method provided by another embodiment of the present disclosure.
FIG. 10 is a signaling diagram of a machine learning model processing method provided by another embodiment of the present disclosure.
FIG. 11 is a flow chart of a machine learning model processing method provided by another embodiment of the present disclosure.
FIG. 12 is a signaling diagram of a machine learning model processing method provided by another embodiment of the present disclosure.
FIG. 13 is a flow chart of a machine learning model processing method provided by another embodiment of the present disclosure.
FIG. 14 is a signaling diagram of a machine learning model processing method provided by another embodiment of the present disclosure.
FIG. 15a is a flow chart of a machine learning model processing method provided by another embodiment of the present disclosure.
FIG. 15b is a flow chart of a machine learning model processing method provided by another embodiment of the present disclosure.
FIG. 16 is a flow chart of a machine learning model processing method provided by another embodiment of the present disclosure.
FIG. 17 is a structural diagram of a user equipment provided by an embodiment of the present disclosure.
FIG. 18 is a structural diagram of an AF entity provided by an embodiment of the present disclosure.
FIG. 19 is a structural diagram of a first network function entity provided by an embodiment of the present disclosure.
FIG. 20 is a structural diagram of a machine learning model processing apparatus provided by an embodiment of the present disclosure.
FIG. 21 is a structural diagram of a machine learning model processing apparatus provided by another embodiment of the present disclosure.
FIG. 22 is a structural diagram of a machine learning model processing apparatus provided by another embodiment of the present disclosure.

### DESCRIPTION OF EMBODIMENTS

The term "and/or" in this disclosure describes the relationship between associated objects, indicating that there can be three relationships, for example, A and/or B, which can mean three cases: A alone exists; A and B exist simultaneously; and B alone exists. The character "/" generally indicates that the related objects are in an "or" relationship.

In the embodiment of this disclosure, the term "a plurality of" refers to two or more than two, and other quantifiers are similar to it. Furthermore, the terms "first", "second", etc. are used for descriptive purposes only and cannot be understood as indicating or implying relative importance or implicitly indicating the quantity of indicated technical features.

In order to realize intelligent data analysis and control of mobile communication networks, the Network Data Analytics Function (Network Data Analytics Function, NWDAF) is introduced in 5G networks. NWDAF is based on artificial intelligence (Artificial Intelligence, AI) algorithms and provides network data analysis (hereinafter referred to as "analysis" or "network analysis") services to other network function entities through interaction with other network function entities.

Federated learning can be performed between a NWDAF and other NWDAFs to obtain an optimized machine learning (ML) model for AI inference. An existing federated learning process between NWDAFs is as follows: one or more machine learning model consumer NWDAFs (ML model consumer) request a global model from a machine learning model provider NWDAF (ML model provider), and then use locally collected data to train the model, to generate a local model, and send a locally updated model parameter to the machine learning model provider NWDAF. The machine learning model provider NWDAF updates the global model based on the locally updated model parameter provided by the machine learning model user NWDAFs, and then provides the updated global model to the machine learning model user NWDAFs. This cycle is repeated several times, and a better model for the network analysis is finally obtained.

The rapidly developing communication service and application demands require UE (User Equipment) to further support AI functions to achieve intelligent applications and intelligent communications. Federated learning between the UE and the network will help improve the training efficiency and performance of the machine learning model of the UE and the network, while protecting the privacy of the local user data of the UE. However, the prior art does not yet support federated learning between the UE and the network (such as NWDAF), including the UE subscribing to the machine learning model from the network and performing updates thereon.

In order to solve the above technical problems, in embodiments of the present disclosure, a UE creates a local machine learning model for a target application in advance according to a first model file of a global machine learning model provided by a first network function entity, and the UE performs retraining of the local machine learning model based on local training data, and sends model-related data of the trained local machine learning model to the first network function entity through an application layer or a non-access stratum (Non-Access-Stratum, NAS), so that the first network function entity updates the global machine learning model; the UE obtains a second model file of the updated global machine learning model from the first network function entity through the application layer or the NAS, to update the local machine learning model. Federated learning between the UE and the first network function entity for providing the model can be realized through the application layer or the non-access stratum NAS, improving the performance of sharing, transmitting and training machine learning models between the UE and the network, meeting the rapidly developing communication services and application demands.

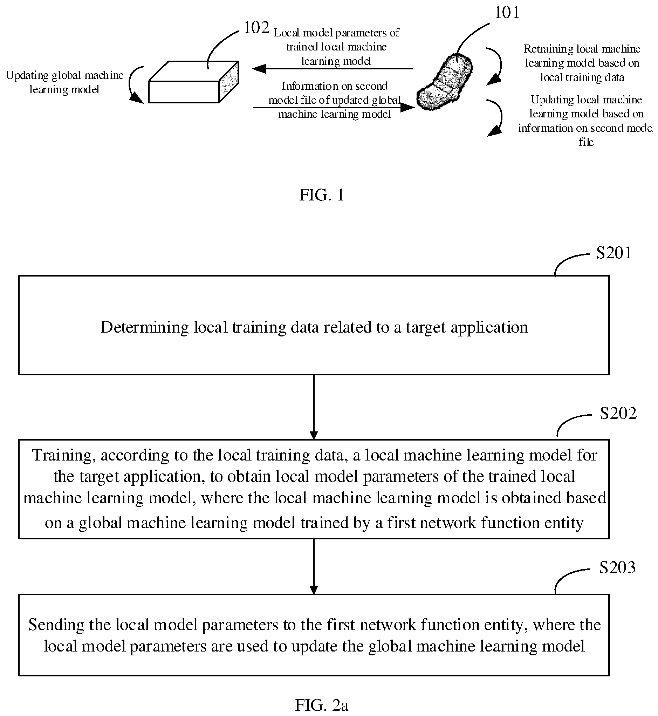

An embodiment of the present disclosure is applied to an application scenario as shown in FIG. 1. The application scenario includes a user equipment 101 and a first network function entity 102 for providing a model. Optionally, the first network function entity 102 may be an NWDAF entity. The user equipment 101 creates a local machine learning model for a target application in advance based on a first model file of a global machine learning model provided by the first network function entity 102. The first model file may include a model parameter of the global machine learning model. Further, the user equipment 101 trains the local machine learning model according to the local training data, and sends the local model parameters of the trained local machine learning model to the first network function entity 102 through an application layer or a non-access stratum NAS, and the first network function entity 102 updates the global machine learning model; the user equipment 101 then obtains information on a second model file of the updated global machine learning model from the first network function entity through the application layer or the NAS, and updates the local machine learning model.

It should be noted that a user plane is used to transmit application layer data, so transmitting data through the application layer in an embodiment of the present disclosure can be understood as using the user plane to transmit application layer data.

The user equipment (UE) involved in embodiments of the present disclosure may be a device that provides voice and/or data connectivity to users, a handheld device with a wireless connection function, or other processing equipment connected to a wireless modem, etc. In different systems, names of user equipment may also be different. For example, in a 5G system, the user equipment may be called UE. Wireless terminal equipment can communicate with a core network (Core Network, CN) via a Radio Access Network (Radio Access Network, RAN). The wireless terminal equipment can be a mobile terminal equipment, such as a mobile phone (or "cellular" phone) and a computer with a mobile terminal equipment, which may be, for example, portable, pocket-sized, handheld, computer-built-in or vehicle-mounted mobile devices, exchanging speech and/or data with the radio access network. For example, Personal Communication Service (Personal Communication Service, PCS) phones, cordless phones, Session Initiated Protocol (Session Initiated Protocol, SIP) phones, Wireless Local Loop (Wireless Local Loop, WLL) stations, Personal Digital Assistants (Personal Digital Assistant, PDA) and other equipment. Wireless terminal equipment may also be called a system, a subscriber unit (subscriber unit), a subscriber station (subscriber station), a mobile station (mobile station), a mobile (mobile), a remote station (remote station), or an access point (access point), a remote terminal (remote terminal), an access terminal (access terminal), a user terminal (user terminal), a user agent (user agent), a user device (user device), and is not limited in the embodiments of the present disclosure.

The technical solutions of embodiments of the present disclosure will be clearly and comprehensively described below with reference to the accompanying drawings in the embodiments of the present disclosure. Obviously, the described embodiments are only some of the embodiments of the present disclosure, not all of them. All other embodiments obtained based on the embodiments in this disclosure by those of ordinary skill in the art without creative efforts fall within the protection scope of this disclosure.

The method and the apparatus are based on the same application concept. Since the principles of the method and the apparatus to solve the problem are similar, mutual reference may be made to the implementations of the apparatus and the method, and the repeated details will not be described.

### Embodiment 1

FIG. 2a is a flow chart of a machine learning model processing method provided by an embodiment. As shown in FIG. 2a, this embodiment provides a machine learning model processing method. The execution body is a user equipment UE. The specific steps of the method are as follows:
S201, determining local training data related to a target application;
S202, training, according to the local training data, a local machine learning model for the target application, to obtain local model parameters of the trained local machine learning model, where the local machine learning model is obtained based on a global machine learning model trained by a first network function entity; and
S203, sending the local model parameters to the first network function entity, where the local model parameters are used to update the global machine learning model.

In this embodiment, the first network function entity for providing a model can provide the global machine learning model for the target application. This embodiment is not limited to a specific machine learning model, such as a machine learning model for image processing. Optionally, the first network function entity may be an NWDAF entity, or other device capable of providing a machine learning model.

The UE may obtain a first model file (model file) of the global machine learning model from the first network function entity in advance. The first model file may include a model parameter of the global machine learning model. The UE creates the local machine learning model for the target application based on the first model file. Optionally, the UE can obtain the first model file from the first network function entity through an application layer or a non-access stratum NAS. The specific process will not be described here.

At any time after the UE creates the local machine learning model, such as in the stage of applying the local machine learning model, the local machine learning model can be retrained based on the local training data related to the target application in the UE, and the model parameter of the local machine learning model can be updated, to obtain the local model parameters. The specific retraining process can use any training method, which will not be described here. The local training data can be any data related to the target application, such as relevant data in the process of using the local machine learning model, or historical data of the target application, etc.

Further, after the local machine learning model completes training, in order to implement federated learning, the UE can send the local model parameters of the trained local machine learning model to the first network function entity, optionally, through the application layer or the non-access stratum NAS. The first network function entity can receive the local model parameters sent by any one or more UEs. In addition, the first network function entity may also receive the local model parameters sent by other network function entities (such as other NWDAFs), and updates the global machine learning model based on the received local model parameters, so as to realize learning modeling of the global machine model with data between UEs isolated to protect user privacy and data security, in which the process of updating the global machine learning model can use any model update method in the federated learning scenario and will not be described again here.

In an optional embodiment, the UE may send the local model parameters of the trained local machine learning model to the first network function entity through the application layer, that is, send the local model parameters as application layer data to the first network function entity, and the application layer data can be transmitted using the user plane, so the UE uses the user plane to send the local model parameters. Specifically, the UE sends the local model parameters to an AF (Application Function, application function) entity through the application layer, and then the AF entity sends model update information carrying the local model parameters to the first network function entity directly or through an NEF (Network Exposure Function, Network Exposure Function) entity, so that the first network function entity updates the global machine learning model based on the local model parameters.

In another optional embodiment, the UE can send the local model parameters of the trained local machine learning model to the first network function entity through the non-access stratum NAS, that is, the UE uses a control plane to send the local model parameters. Specifically, the UE sends the model update information including the local model parameters to an AMF (Access and Mobility Management Function, access and mobility management function) entity, and then the AMF entity can send the model update information including the local model parameters to the first network function entity such that the first network function entity updates the global machine learning model based on the local model parameters.

In the machine learning model processing method provided by this embodiment, a UE creates a local machine learning model for a target application in advance according to a global machine learning model provided by a first network function entity, determines local training data related to the target application, trains the local machine learning model according to the local training data, and sends local model parameters of the trained local machine learning model to the first network function entity, so that the first network function entity updates the global machine learning model. With this embodiment, federated learning can be realized between the UE and the first network function entity for providing the model, and the performance of sharing, transmitting and training machine learning models between the UE and the network is improved, thus meeting the rapidly developing communication services and application demands.

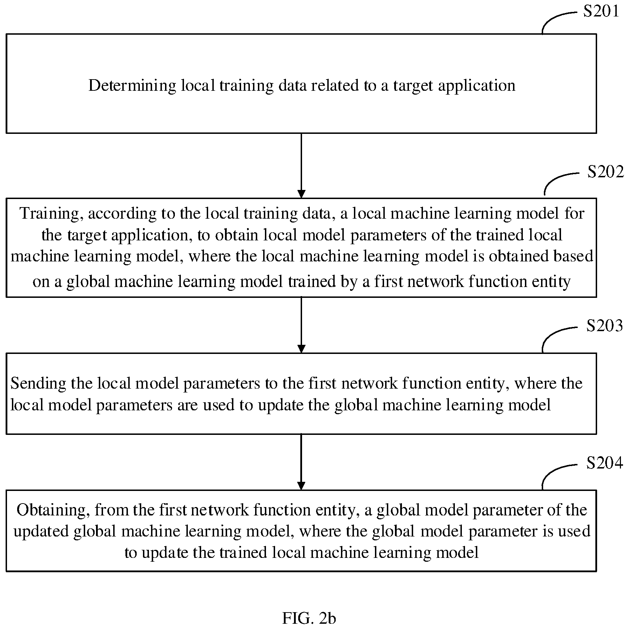

Optionally, as shown in FIG. 2b, based on the above embodiment, after S203, a following step may further be included:
S204, obtaining, from the first network function entity, a global model parameter of the updated global machine learning model, where the global model parameter is used to update the trained local machine learning model;
where the global model parameter is obtained by the first network function entity by updating the global machine learning model using the local model parameters sent by at least one UE.

In this embodiment, after the first network function entity updates the global machine learning model according to the received local model parameters, the first network function entity may transmit the global model parameter of the updated global machine learning model to the UE, so that the UE updates the local machine learning model according to the updated global model parameter, so that the updated local machine learning model has better prediction capabilities. Optionally, the first network function entity may transmit a second model file of the updated global machine learning model to the UE, or transmit address information of the second model file to the UE, where the second model file includes the global model parameter of the updated global machine learning model.

The UE may receive a model update response sent by the AF entity or the AMF entity, where the model update response includes information on the global model parameter of the updated global machine learning model.

Specifically, in an optional embodiment, the AF entity may obtain the global model parameter, or the second model file including the updated global model parameter, or the address information of the second model file from the first network function entity, and send the model update response to the UE through the application layer, in which the model update response is sent to the first network function entity as application layer data. The application layer data can be transmitted using the user plane, so the UE can use the user plane to send the model update response. The model update response includes the global model parameter, or the second model file, or the address information of the second model file. When obtaining the address information of the second model file, the UE can obtain the second model file according to the address information of the second model file, to further obtain the updated global model parameter. In addition, the model update response may also include subscription correlation information and a UE ID etc., where the subscription correlation information may be correlation information between the global model parameter and the UE.

In another optional embodiment, the AMF entity may obtain the global model parameter, or the second model file including the updated global model parameter, or the address information of the second model file from the first network function entity, and send the model update response to the UE. The model update response includes the global model parameter, or the second model file, or the address information of the second model file. When obtaining the address information of the second model file, the UE can obtain the second model file according to the address information of the second model file, to further obtain the updated global model parameter. In addition, the model update response may also include subscription correlation information, a UE ID, etc.

It should be noted that the first network function entity may provide a global machine learning model for multiple different UEs. Therefore, the first network function entity may receive local model parameters of the trained local machine learning model sent by one or more UEs, and then update the global machine learning model according to one or more local model parameters; and after the first network function entity updates the global machine learning model, the second model file of the updated global machine learning model can be transferred to the one or more UEs, or to all UEs that subscribe to the global machine learning model.

### Embodiment 2

In this embodiment, the implementation of the UE obtaining the local machine learning model based on the global machine learning model trained by the first network function entity before S201 in Embodiment 1 is introduced in detail.

In this embodiment, the obtaining the local machine learning model based on the global machine learning model trained by the first network function entity, specifically includes:
obtaining, from the first network function entity, a first model file of the global machine learning model; and
creating the local machine learning model based on the first model file.

In this embodiment, when initially creating the local machine learning model, the UE may obtain the first model file of the global machine learning model from the first network function entity, where the first model file may include a global model parameter of the global machine learning model, and then the UE can create the local machine learning model according to the global model parameter in the first model file, as a basis for the UE to train the local machine learning model based on the local training data.

In this embodiment, the obtaining, from the first network function entity, the first model file of the global machine learning model includes:
sending, to the first network function entity, model obtaining information carrying a UE ID and/or model description information; and
obtaining, from the first network function entity, information on the first model file of the global machine learning model which is provisioned based on the model obtaining information.

In this embodiment, there may be at least one first network function entity that provides different global machine models for the UE. Therefore, when the UE obtains the global machine model from the first network function entity, the UE ID and/or the model description information may be carried, so as to select, according to the UE ID and/or the model description information, the first network function entity that serves the UE and/or that can provide a global machine learning model that satisfies the model description information, thus to obtain the global machine learning model required by the UE.

The model description information includes at least one of the following: an application ID, an application feature ID, time information, location information, and other model characteristic information.

For the application ID (Application ID), an application includes such as a camera application, a Vehicle to Everything (V2X: Vehicle to Everything) application, a remote control.

For the application feature ID (Feature ID), an application feature includes such as portrait photography in a camera application, navigation in a Vehicle to Everything application, and excavator control in a remote control.

The time information indicates a time period or a time point for using the machine learning model, such as the time period for a camera, a Vehicle to Everything service or a remote control.

Location information indicates an area or a location where the machine learning model is used, and can also include characteristic information of the area/the location, such as urban, rural, mountainous, plain, etc..

Other model characteristic information includes such as the resolution and filter information of the camera application (black and white, retro, etc.), the positioning/navigation accuracy of the Vehicle to Everything service, the accuracy information of the remote control, etc.

Based on the above embodiments, optionally, the sending, to the first network function entity, the model obtaining information carrying the UE ID and/or the model description information may specifically include:
sending, through an application layer, the model obtaining information carrying the UE ID and/or the model description information, to an AF entity, so that the model obtaining information is sent to the first network function entity through the AF entity according to the UE ID and/or the model description information; or,
sending, through the application layer, the model obtaining information carrying the UE ID and/or the model description information, to the AF entity, where the AF entity sends the model obtaining information to the first network function entity through an NEF entity according to the UE ID and/or the model description information; or,
sending, through a non-access stratum, the model obtaining information carrying the UE ID and/or the model description information, to an AMF entity, so that the model obtaining information is sent to the first network function entity through the AMF entity according to the UE ID and/or the model description information.

In this embodiment, the above different approaches can be used to send the model obtaining information to the first network function entity. The UE sending the model obtaining information to the AF entity through the application layer implements the transmission of the model obtaining information based on the user plane. That is, the model obtaining information is used as application layer data and transmitted through the user plane, and the model obtaining information sent to the AMF entity through the non-access stratum is based on the control plane to realize the transmission of the model obtaining information; further, after the AF entity receives the model obtaining information, the AF entity can select the first network function entity directly or through the NEF entity according to the UE ID and/or the model description information, and then transmit the model obtaining information to the first network function entity. After receiving the model obtaining information, the AMF entity can also select the first network function entity according to the UE ID and/or the model description information, and then transmit the model obtaining information to the first network function entity.

Based on the above embodiment, the obtaining, from the first network function entity, the first model file of the global machine learning model may specifically include:
receiving a model obtaining response sent by an AF entity or an AMF entity, where the model obtaining response includes the information on the first model file, and is used to obtain the first model file according to the information on the first model file.

In this embodiment, similar to Embodiment 1, the AF entity may obtain the global model parameter, or the first model file including the global model parameter, or the address information of the first model file from the first network function entity, and use the application layer to send a model obtaining response to the UE, that is, the model obtaining response, as application layer data, is transmitted through the user plane. The model obtaining response includes the global model parameter, or the first model file, or the address information of the first model file, where when obtaining the address information of the first model file, the UE can obtain the first model file according to the address information of the first model file, to further obtain the updated global model parameter. In addition, the model obtaining response can also include subscription correlation information and UE ID, etc., where the subscription correlation information may be correlation information between the global model parameter and the UE.

In another optional embodiment, the AMF entity may obtain the global model parameter, or the first model file including the global model parameter, or the address information of the first model file from the first network function entity, and send the model obtaining response to the UE. The model obtaining response includes the global model parameter, or the first model file, or the address information of the first model file, where when obtaining the address information of the first model file, the UE can obtain the first model file according to the address information of the first model file, to further obtain the updated global model parameter. In addition, the model obtaining response can also include subscription correlation information and UE ID, etc..

### Embodiment 3

This embodiment introduces in detail the implementation of the UE obtaining the local machine learning model based on the global machine learning model trained by the first network function entity in Embodiment 2.

In this embodiment, the UE can obtain the information on the first model file of the global machine learning model from the first network function entity through the application layer, that is, the information on the first model file, as application layer data, is transmitted through the user plane, where the information on the first model file may include the global model parameter, or the first model file including the global model parameter, or the address information of the first model file. Then the UE creates the local machine learning model based on the information on the first model file, that is, the UE requests a subscription to the global machine learning model from the AF entity and further from the first network function entity through the application layer. The AF entity obtains the first model file of the global machine learning model from the first network function entity on behalf of the UE and provides the first model file to the UE through the application layer, thereby realizing machine learning model subscription over the user plane.

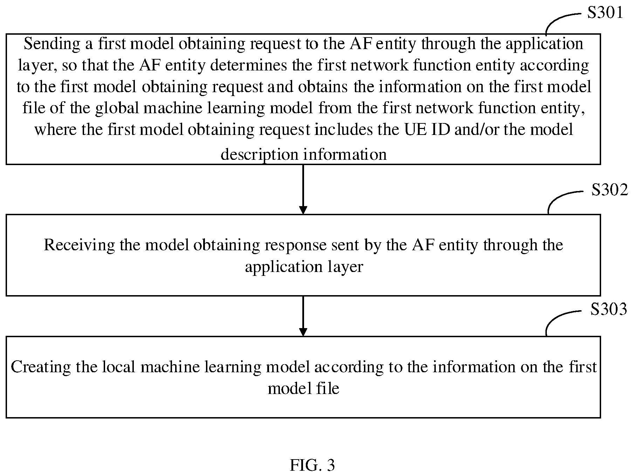

The AF entity in this embodiment is a trusted AF entity, and as shown in FIG. 3, the above process specifically is as follows:
S301, sending a first model obtaining request to the AF entity through the application layer, so that the AF entity determines the first network function entity according to the first model obtaining request and obtains the information on the first model file of the global machine learning model from the first network function entity, where the first model obtaining request includes the UE ID and/or the model description information;
S302, receiving the model obtaining response sent by the AF entity through the application layer;
where the model obtaining response may include the information on the first model file; the information on the first model file may include the global model parameter, or the first model file including the global model parameter, or the address information of the first model file; the model obtaining response may also include subscription correlation information, the UE ID, etc., and the information on the first model file is obtained by the AF entity from the first network function entity;
S303, creating the local machine learning model according to the information on the first model file.

In this embodiment, the UE requests the global machine learning model from the first network function entity via the AF entity through the application layer. After obtaining the global machine learning model, the AF entity can send the global machine learning model to the UE through the application layer.

Optionally, based on the above embodiment, before S301, a PDU (Protocol Data Unit, protocol data unit) session between the UE and the AF entity may be established first, to connect the UE and the AF entity at the application layer, so as to transmit the first model obtaining request and the model obtaining response.

The PDU session includes: a PDU session dedicated to transmitting machine learning model data, or a PDU session dedicated to carrying specific application data. The PDU session includes a QoS flow specifically used to transmit machine learning model data, and/or a QoS flow specifically used to transmit machine learning model related signaling, where the above QoS flow is established through a PDU session establishment or modification process.

Based on the above embodiment, the first model obtaining request includes the UE ID and/or the model description information; the AF entity can select, according to the UE ID and/or the model description information, an alternative first network function entity serving the UE, and/or an alternative first network function entity that can provide a global machine learning model that satisfies the model description information, to be determined as the first network function entity. The model description information includes at least one of the following: an application ID, an application feature ID, time information, location information, and other model characteristic information.

For the application ID (Application ID), an application includes such as a camera application, a Vehicle to Everything (V2X: Vehicle to Everything) application, a remote control.

For the application feature ID (Feature ID), an application feature includes such as portrait photography in a camera application, navigation in a Vehicle to Everything application, and excavator control in a remote control.

The time information indicates a time period or a time point for using the machine learning model, such as the time period for a camera, a Vehicle to Everything service or a remote control.

Location information indicates an area or a location where the machine learning model is used, and can also include characteristic information of the area/the location, such as urban, rural, mountainous, plain, etc..

Other model characteristic information includes such as the resolution and filter information of the camera application (black and white, retro, etc.), the positioning/navigation accuracy of the Vehicle to Everything service, the accuracy information of the remote control, etc.

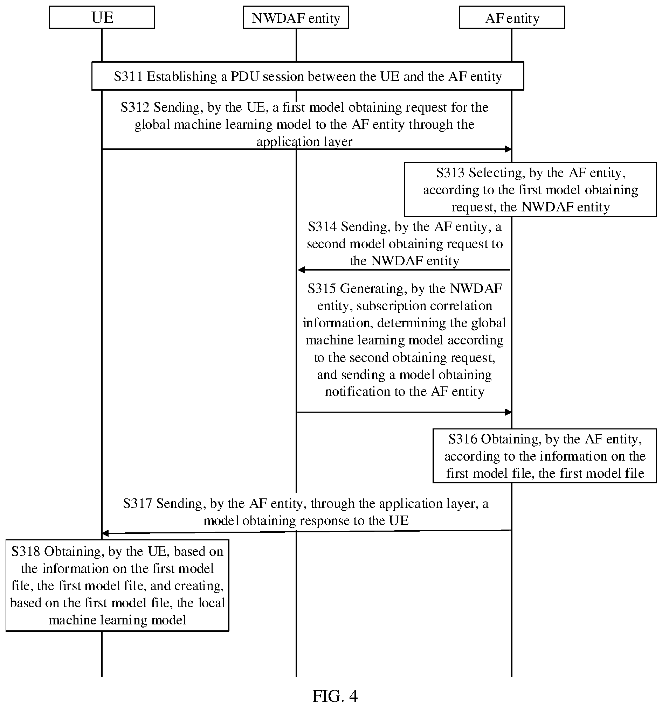

As an example, the above process of the embodiment is introduced in detail below with reference to the signaling diagram shown in FIG. 4, in which the first network function entity being the NWDAF entity is taken as an example.

S311, establishing a PDU session between the UE and the AF entity to connect the UE and the AF entity at the application layer.

The PDU session includes: a PDU session dedicated to transmitting machine learning model data, or a PDU session dedicated to carrying specific application data.

S312, sending, by the UE, a first model obtaining request for the global machine learning model to the AF entity through the application layer.

The first model obtaining request may include the UE ID and/or the model description information.

Optionally, the first model obtaining request may also include an NWDAF entity ID to indicate the NWDAF entity serving the UE. Then the AF entity may directly determine the NWDAF entity without performing the following process of selecting the NWDAF entity; the NWDAF entity ID may be preconfigured in the UE or determined through the historical model subscription and update process.

S313, selecting, by the AF entity, according to the first model obtaining request, the NWDAF entity.

The AF entity may select an alternative NWDAF entity that serves the UE and/or an alternative NWDAF entity that can provide a global machine learning model that satisfies the model description information, to be determined as the final NWDAF entity.

S314, sending, by the AF entity, a second model obtaining request to the NWDAF entity.

The second model obtaining request includes the UE ID and/or the model description information; the AF entity can extract required information from the first model obtaining request and generate the second model obtaining request that can be sent to the NWDAF.

S315, generating, by the NWDAF entity, subscription correlation information, determining the global machine learning model according to the second obtaining request, and sending a model obtaining notification to the AF entity.

Model subscription is an optional way to obtain the model. After the UE subscribes to the global machine learning model, after the global machine learning model is updated, the first network function entity can push the global model parameter of the updated global machine learning model to the UE. Specifically, the model subscription notification includes model information of the global machine learning model and subscription correlation information. The model information includes information on the first model file; the information on the first model file may be the following information: the global model parameter of the global machine learning model, or the first model file containing the global model parameter of the global machine learning model, or the address information of the first model file, or the information on the network function entity (such as database function entity) that stores the first model file, etc. The subscription correlation information can be a subscription correlation ID (Subscription Correlation ID), and the NWDAF entity allocates the subscription correlation ID. Specifically, the NWDAF entity can allocate a same subscription correlation ID to different UEs subscribing to the same model, or allocate different subscription correlation IDs to different UEs subscribing to the same model. Of course, it is possible to not use the model subscription approach in this example, that is, the above subscription correlation information does not need to be involved.

The NWDAF entity can provide the global machine learning model that meets the model description information. For example, the model description information is black and white portrait photography in a rural environment from 6 p.m. to 7 p.m. The model provided by the NWDAF entity can obtain the best/better photographic effect in this scene; alternatively, the model description information is the traffic navigation information for area A from 6 p.m. to 7 p.m., and the model provided by the NWDAF entity can achieve the best/better navigation effect at this time and area.

Optionally, S316, obtaining, by the AF entity, according to the information on the first model file, the first model file.

S317, sending, by the AF entity, through the application layer, a model obtaining response to the UE.

The model obtaining response includes the information on the first model file, and may also include the subscription correlation information and the UE ID; S318, obtaining, by the UE, based on the information on the first model file, the first model file, and creating, based on the first model file, the local machine learning model. That is, the UE can create the local machine learning model based on the global model parameter in the first model file.

Through the above process, this embodiment can realize, through the application layer, that the UE obtains the machine learning model from the first network function entity for providing the model, improving the performance of sharing, transmitting and training the machine learning model between the UE and the network, and meeting the rapidly developing communication services and application demands.

### Embodiment 4

This embodiment introduces in detail the implementation of the UE obtaining the local machine learning model based on the global machine learning model trained by the first network function entity in Embodiment 2.

In this embodiment, the UE may obtain the information on the first model file of the global machine learning model from the first network function entity through the application layer. The information on the first model file may include the global model parameter, or the first model file including the global model parameter, or the address information of the first model file. Then the UE creates the local machine learning model based on the information on the first model file, that is, the UE requests the global machine learning model from the AF entity and further from the first network function entity through the application layer. The AF entity obtains the first model file of the global machine learning model from the first network function entity on behalf of the UE and provides the first model file to the UE through the application layer, thereby realizing machine learning model subscription over the user plane.

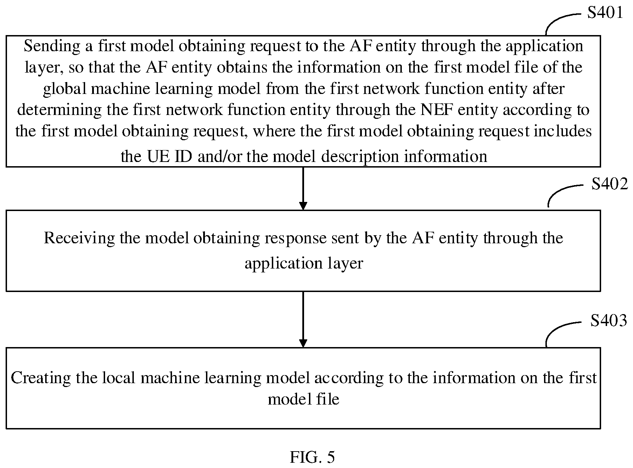

Unlike the above embodiment, the AF entity in this embodiment is an untrusted AF entity. The AF entity can use NEF to implement the above process, and as shown in FIG. 5, the specific process is as follows:
S401, sending a first model obtaining request to the AF entity through the application layer, so that the AF entity obtains the information on the first model file of the global machine learning model from the first network function entity after determining the first network function entity through the NEF entity according to the first model obtaining request, where the first model obtaining request includes the UE ID and/or the model description information;
S402, receiving the model obtaining response sent by the AF entity through the application layer,
where the model obtaining response includes the information on the first model file; the information on the first model file may include the global model parameter, or the first model file including the global model parameter, or the address information of the first model file; the model obtaining response may also include subscription correlation information, the UE ID, etc., and the information on the first model file is obtained by the AF entity from the first network function entity;
S403, creating the local machine learning model according to the information on the first model file.

In this embodiment, since the AF entity is an untrusted AF entity, the communication between the AF and the first network function entity is implemented through the NEF entity, that is, the UE sends the first model obtaining request to the AF entity through the application layer, and the AF entity sends a third model obtaining request to the NEF entity. The NEF entity selects the first network function entity and then sends a fourth model obtaining request to the first network function entity; and the first network function entity can send the information on the first model file to the AF through the NEF entity. After obtaining the information on the first model file, the AF entity can send the information on the first model file to the UE through the application layer.

Optionally, based on the above embodiment, before S401, a PDU session between the UE and the AF entity may be established first to connect the UE and the AF entity at the application layer so as to transmit the first model obtaining request and the model obtaining response. For this, reference may be made to Embodiment 2.

Based on the above embodiments, the first model obtaining request includes the UE ID and/or the model description information; the NEF entity can select, according to the UE ID and/or the model description information, an alternative first network function entity serving the UE and/or an alternative first network function entity that can provide the global machine learning model that satisfies the model description information, to be determined as the first network function entity. For this, reference may be made to Embodiment 2.

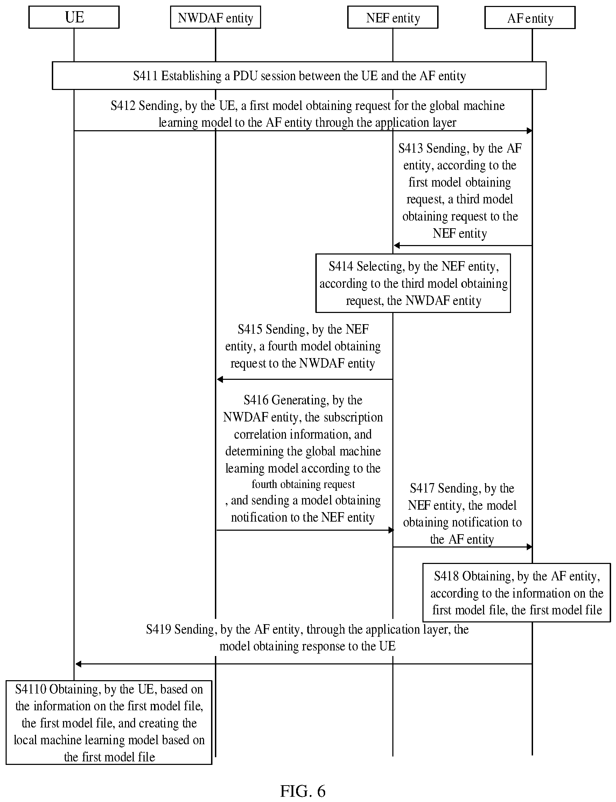

As an example, the above process of the embodiment is introduced in detail below with reference to a signaling diagram shown in FIG. 6, in which the first network function entity being the NWDAF entity is taken as an example.

S411, establishing a PDU session between the UE and the AF entity to connect the UE and the AF entity at the application layer.

S412, sending, by the UE, a first model obtaining request for the global machine learning model to the AF entity through the application layer.

The first model obtaining request may include the UE ID and/or the model description information.

Optionally, the first model obtaining request may also include an NWDAF entity ID to indicate the NWDAF entity serving the UE. Then the NEF entity may directly determine the NWDAF entity without performing the following process of selecting the NWDAF entity.

S413, sending, by the AF entity, according to the first model obtaining request, a third model obtaining request to the NEF entity.

The third model obtaining request may include the UE ID and/or the model description information.

S414, selecting, by the NEF entity, according to the third model obtaining request, the NWDAF entity, where the AF entity can extract required information from the first model obtaining request and generate the third model obtaining request that can be sent to the NEF.

The NEF entity may select an alternative NWDAF entity that serves the UE and/or an alternative NWDAF entity that can provide the global machine learning model that satisfies the model description information, to be determined as the final NWDAF entity.

S415, sending, by the NEF entity, a fourth model obtaining request to the NWDAF entity.

The fourth model obtaining request includes the UE ID and/or the model description information.

S416, generating, by the NWDAF entity, the subscription correlation information, and determining the global machine learning model according to the fourth obtaining request, and sending a model obtaining notification to the NEF entity.

The model obtaining notification includes model information of the global machine learning model and the subscription correlation information. The model information includes the information on the first model file. The information on the first model file may be the following information: the first model file containing the global machine learning model parameter, the address of the first model file, or information on a network function entity (such as a database function entity) that stores the first model file, etc. The subscription correlation information may be a subscription correlation ID, and the NWDAF entity allocates the subscription correlation ID. Specifically, the NWDAF entity may allocate a same subscription correlation ID to different UEs subscribing to the same model, or allocate different subscription correlation IDs to different UEs subscribing to the same model. Of course, it is possible to not use the model subscription approach in this example, that is, the above subscription correlation information does not need to be involved.

S417, sending, by the NEF entity, the model obtaining notification to the AF entity.

The model obtaining notification includes model information of the global machine learning model and the subscription correlation information. The model information includes the information on the first model file. The information on the first model file may be the following information: the first model file containing the global machine learning model parameter, the address of the first model file, or information on a network function entity (such as a database function entity) that stores the first model file, etc.

Optionally, S418, obtaining, by the AF entity, according to the information on the first model file, the first model file.

S419, sending, by the AF entity, through the application layer, the model obtaining response to the UE.

The model obtaining response includes the information on the first model file, and may also include the subscription correlation information and the UE ID.

S4110, obtaining, by the UE, based on the information on the first model file, the first model file, and creating the local machine learning model based on the first model file. That is, the UE can create the local machine learning model based on the global model parameter in the first model file.

Through the above process, this embodiment can realize, through the application layer, that the UE obtains the machine learning model from the first network function entity for providing the model, improving the performance of sharing, transmitting and training the machine learning model between the UE and the network, and meeting the rapidly developing communication services and application demands.

### Embodiment 5

This embodiment introduces in detail the implementation of the UE obtaining the local machine learning model based on the global machine learning model trained by the first network function entity in Embodiment 2.

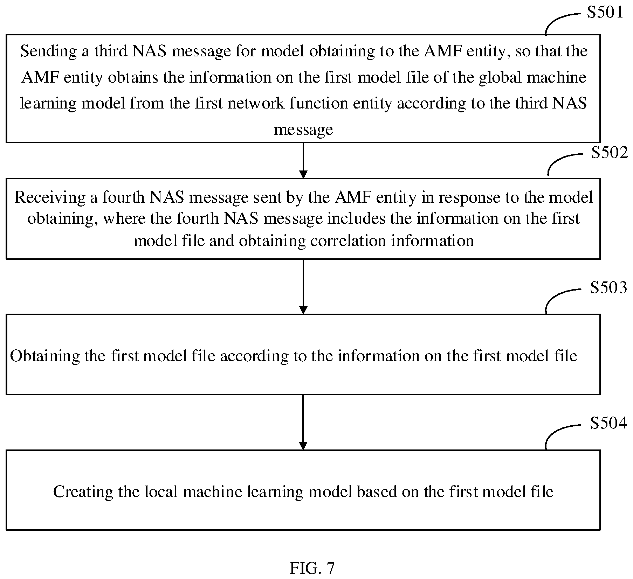

In this embodiment, the UE may obtain the information on the first model file of the global machine learning model from the first network function entity through the non-access stratum NAS, where the information on the first model file may include the global model parameter, or the first model file including the global model parameter, or the address information of the first model file. Then the UE creates the local machine learning model based on the information on the first model file, and as shown in FIG. 7, the specific process is as follows:
S501, sending a third NAS message for model obtaining to the AMF entity, so that the AMF entity obtains the information on the first model file of the global machine learning model from the first network function entity according to the third NAS message;
where the information on the first model file may be the following information: the global model parameter, or the first model file containing the global machine learning model parameter, or the address information of the first model file, or information on a network function entity (such as a database function entity) that stores the first model file, etc.
S502, receiving a fourth NAS message sent by the AMF entity in response to the model obtaining, where the fourth NAS message includes the information on the first model file and obtaining correlation information;
S503, obtaining the first model file according to the information on the first model file.
S504, creating the local machine learning model based on the first model file.

In this embodiment, the UE requests the global machine learning model from the first network function entity through the non-access stratum NAS on the control plane via the AMF entity. After obtaining the information on the first model file of the global machine learning model, the AMF entity may send the information on the first model file to the UE through the non-access stratum NAS, and the UE can obtain the global machine learning model based on the information on the first model file.

Based on the above embodiment, the third NAS message includes the UE ID and/or the model description information. The AMF entity can select, according to the UE ID and/or the model description information, an alternative first network function entity serving the UE and/or an alternative first network function entity that can provide the global machine learning model that satisfies the model description information, to be determined as the first network function entity. For this, reference may be made to Embodiment 2.

Optionally, the NAS message sent by the UE to the AMF entity may include but is not limited to an uplink non-access stratum transport (UL NAS Transport) message, a registration request (Registration Request) message, a service request (Service Request) message, etc.

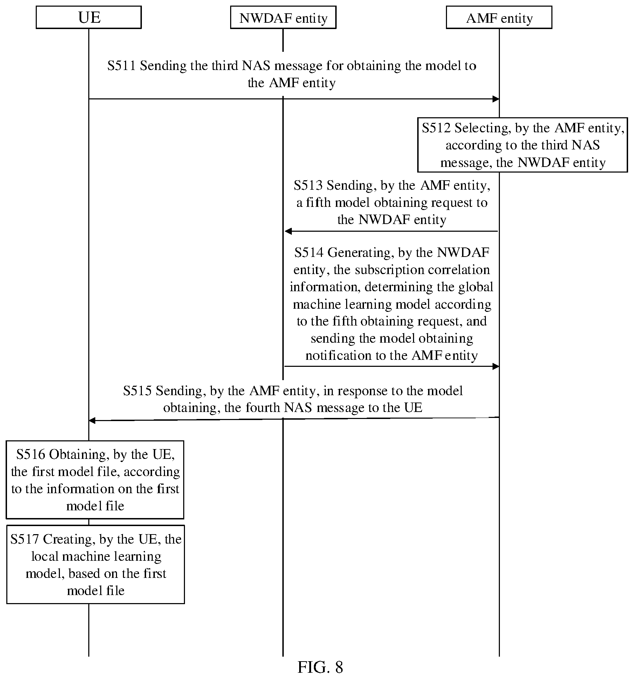

As an example, the above process of the embodiment is introduced in detail below with reference to a signaling diagram shown in FIG. 8, in which the first network function entity being the NWDAF entity is taken as an example.

S511, sending the third NAS message for obtaining the model to the AMF entity.

The third NAS message includes the UE ID and/or the model description information.

Optionally, the third NAS message may also include an NWDAF entity ID to indicate the NWDAF entity serving the UE, and the AMF entity may directly determine the NWDAF entity without performing the following process of selecting the NWDAF entity.

S512, selecting, by the AMF entity, according to the third NAS message, the NWDAF entity.

The AMF entity may select an alternative NWDAF entity that serves the UE and/or an alternative NWDAF entity that can provide the global machine learning model that satisfies the model description information, to be determined as the final NWDAF entity.

S513, sending, by the AMF entity, a fifth model obtaining request to the NWDAF entity.

The fifth model obtaining request includes the UE ID and/or the model description information. The AMF entity can extract required information from the third NAS message request and generate the fifth model obtaining request that can be sent to the NWDAF. Of course, the AMF entity can use the third NAS message request as the fifth model obtaining request and perform an unvarnished transmission to the NWDAF.

S514, generating, by the NWDAF entity, the subscription correlation information, determining the global machine learning model according to the fifth obtaining request, and sending the model obtaining notification to the AMF entity.

The model obtaining notification includes model information of the global machine learning model and the subscription correlation information, and the model information includes the information on the first model file; the information on the first model file may be the following information: the global model parameter of the global machine learning model, or the first model file containing the global machine learning model parameter, or the address information of the first model file, or information on a network function entity (such as a database function entity) that stores the first model file, etc.

The subscription correlation information may be a subscription correlation ID, and the NWDAF entity allocates the subscription correlation ID. Specifically, the NWDAF entity may allocate a same subscription correlation ID to different UEs subscribing to the same model, or allocate different subscription correlation IDs to different UEs subscribing to the same model. Of course, it is possible to not use the model subscription approach in this example, that is, the above subscription correlation information does not need to be involved.

S515, sending, by the AMF entity, in response to the model obtaining, the fourth NAS message to the UE.

The fourth NAS message includes the information on the first model file and the subscription correlation information.

S516, obtaining, by the UE, the first model file, according to the information on the first model file.

S517, creating, by the UE, the local machine learning model, based on the first model file. That is, the UE can create the local machine learning model based on the global model parameter in the first model file.

Through the above process, this embodiment can realize, through the non-access stratum NAS, that the UE obtains the machine learning model from the first network function entity for providing the model, improving the performance of sharing, transmitting and training the machine learning model between the UE and the network, and meeting the rapidly developing communication services and application demands.

### Embodiment 6

In this embodiment, possible implementations of S201-S204 in Embodiment 1 are introduced in detail.

In this embodiment, the UE may transmit the local model parameters to the first network function entity through the AF entity of the application layer after retraining the local machine learning model, and the first network function entity may update the global machine learning model and then transmit the information on the second model file of the updated global machine learning model to the UE through the AF entity of the application layer, thereby realizing the update of the machine learning model on the user plane. The information on the second model file may include the updated global model parameter, or the second model file including the updated global model parameter, or the address information of the second model file.

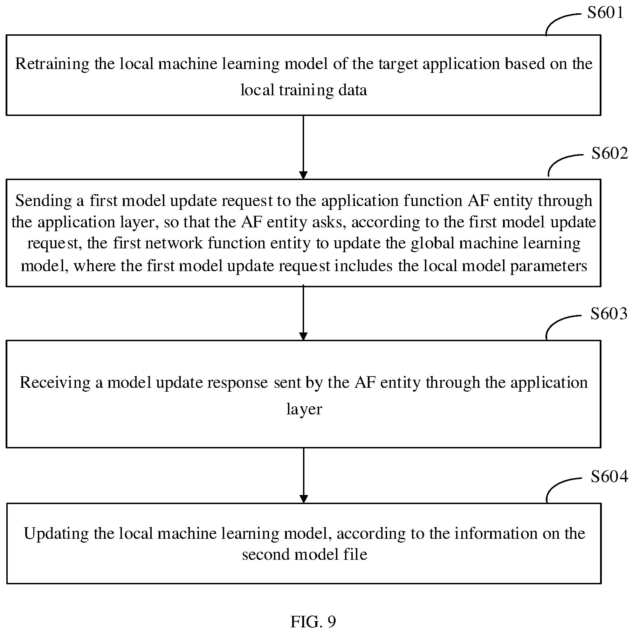

The AF entity in this embodiment is a trusted AF entity. As shown in FIG. 9, after the UE creates the local machine learning model and obtains the local training data, the above process specifically is as follows:
S601, retraining the local machine learning model of the target application based on the local training data;
S602, sending a first model update request to the application function AF entity through the application layer, so that the AF entity asks, according to the first model update request, the first network function entity to update the global machine learning model, where the first model update request includes the local model parameters;
S603, receiving a model update response sent by the AF entity through the application layer;
where the model update response includes the information on the second model file of the updated global machine learning model. The information on the second model file may include the updated global model parameter, or the second model file including the updated global model parameter, or the address information of the second model file. The model update response may also include the subscription correlation information, the UE ID, etc. The information on the second model file is obtained by the AF entity from the first network function entity. The model update request and the model update response are transmitted through the user plane as application layer data;
S604, updating the local machine learning model, according to the information on the second model file.

Specifically, the updated global model parameter included in the second model file is obtained according to the information on the second model file, and the local machine learning model is updated according to the updated global model parameter.

In this embodiment, the UE sends the local model parameters to the first network function entity through the application layer via the AF entity, so that the first network function entity updates the global machine learning model. After obtaining the updated global machine learning model, the AF entity can send the updated global machine learning model to the UE through the application layer.

Optionally, based on the above embodiment, before S601, a PDU session between the UE and the AF entity may be established first to connect the UE and the AF entity at the application layer so as to transmit the first model update request and the model update response. Of course, a PDU session established during the model obtaining phase can also be used.

Optionally, the first model update request also includes at least one of the following: the subscription correlation information, the UE ID, the application ID, the first network function entity ID, for the AF entity to determine the first network function entity and/or the global machine learning model. In this embodiment, model subscription context of the UE can be stored during model subscription, and then based on the model subscription context, the first network function entity for providing the global machine learning model for the UE is determined through the subscription correlation information, the UE ID, the application ID, and the first network function entity ID.

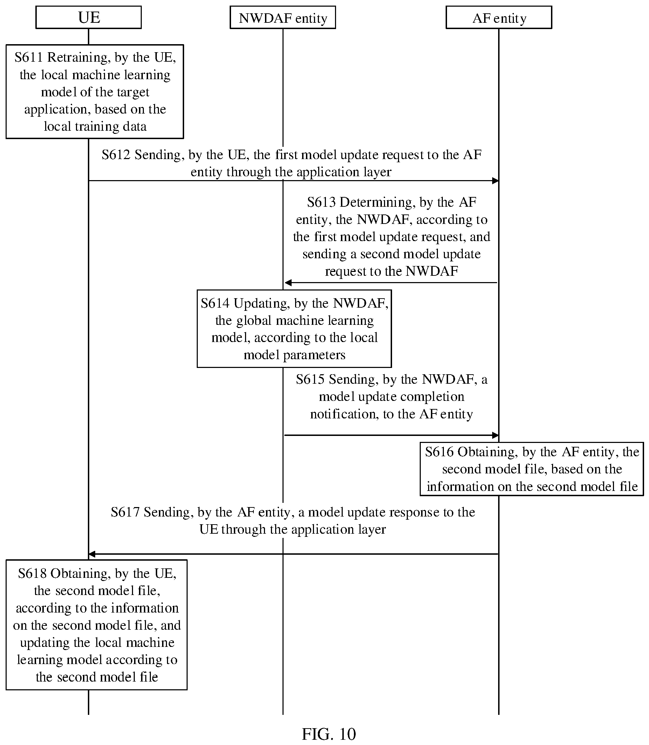

As an example, the above process of the embodiment is introduced in detail below with reference to a signaling diagram shown in FIG. 10, in which the first network function entity being the NWDAF entity is taken as an example.

S611, retraining, by the UE, the local machine learning model of the target application, based on the local training data.

S612, sending, by the UE, the first model update request to the AF entity through the application layer.

The first model update request includes the local model parameters and at least one of the following: the subscription correlation information, the UE ID, the application ID, and the NWDAF ID.

S613, determining, by the AF entity, the NWDAF, according to the first model update request, and sending a second model update request to the NWDAF.

The second model update request may include the local model parameters; the AF entity may extract required information from the first model update request and generate the second model update request that can be sent to the NWDAF.

S614, updating, by the NWDAF, the global machine learning model, according to the local model parameters.

S615, sending, by the NWDAF, a model update completion notification, to the AF entity.

The model update completion notification includes the model information and the subscription correlation information of the updated global machine learning model, and the model information includes the information on the second model file; the information on the second model file can be the following information: the updated global model parameter, or the second model file containing the updated global model parameter, or the address information of the second model file, or information on a network function entity (such as a database function entity) that stores the second model file, etc.

Optionally, S616, obtaining, by the AF entity, the second model file, based on the information on the second model file.

S617, sending, by the AF entity, a model update response to the UE through the application layer.

The model update response includes the information on the second model file, and may also include the subscription correlation information and the UE ID.

S618, obtaining, by the UE, the second model file, according to the information on the second model file, and updating the local machine learning model according to the second model file. That is, the UE can update the local machine learning model based on the updated global model parameter in the second model file.

Through the above process, this embodiment can realize, through the application layer, federated learning of the machine learning model between the UE and the NWDAF for providing the model, improving the performance of sharing, transmitting and training the machine learning model between the UE and the network, and meeting the rapidly developing communication services and application demands.

### Embodiment 7

In this embodiment, possible implementations of S201-S204 in Embodiment 1 are introduced in detail.

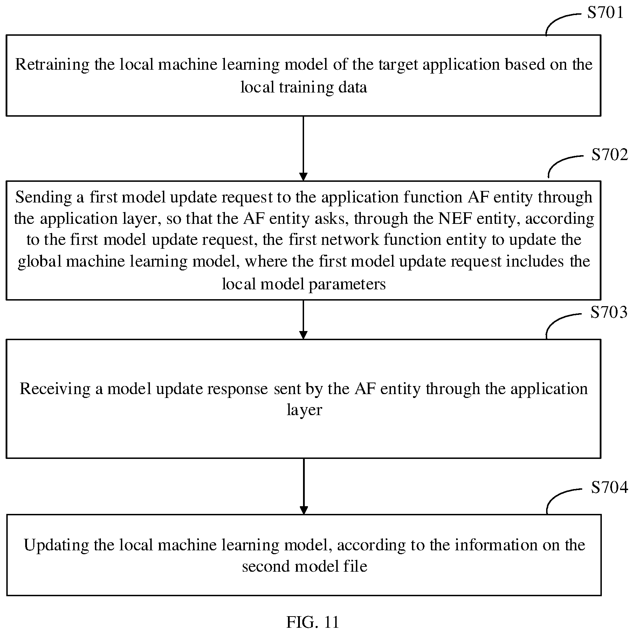

In this embodiment, the UE may transmit the local model parameters to the first network function entity through the AF entity of the application layer after retraining the local machine learning model, and the first network function entity may update the global machine learning model and then transmit the information on the second model file of the updated global machine learning model to the UE through the AF entity of the application layer, thereby realizing the update of the machine learning model on the user plane. The information on the second model file may include the updated global model parameter, or the second model file including the updated global model parameter, or the address information of the second model file. Unlike the above embodiment, the AF entity in this embodiment is an untrusted AF entity. The AF entity can use the NEF to implement the above process. As shown in FIG. 11, after the UE creates the local machine learning model and obtains the local training data, the above process is as follows:
S701, retraining the local machine learning model of the target application based on the local training data;
S702, sending a first model update request to the application function AF entity through the application layer, so that the AF entity asks, through the NEF entity, according to the first model update request, the first network function entity to update the global machine learning model, where the first model update request includes the local model parameters;
S703, receiving a model update response sent by the AF entity through the application layer,
where the model update response includes the information on the second model file of the updated global machine learning model. The information on the second model file may include the updated global model parameter, or the second model file including the updated global model parameter, or the address information of the second model file. The model update response may also include the subscription correlation information, the UE ID, etc. The information on the second model file is obtained by the AF entity from the first network function entity;
S704, updating the local machine learning model, according to the information on the second model file.

Specifically, the updated global model parameter included in the second model file is obtained according to the information on the second model file, and the local machine learning model is updated according to the updated global model parameter included in the second model file.

In this embodiment, since the AF entity is an untrusted AF entity, the communication between the AF and the first network function entity is implemented through the NEF entity, that is, the UE sends the first model update request to the AF entity through the application layer, and the AF entity sends a third model update request to the NEF entity. After determining the first network function entity, the NEF entity sends a fourth model update request to the first network function entity; and the first network function entity can send the information on the second model file to the AF through the NEF entity. After obtaining the information on the second model file, the AF entity can send the information on the second model file to the UE through the application layer.

Optionally, based on the above embodiment, before S601, a PDU session between the UE and the AF entity may be established first to connect the UE and the AF entity at the application layer so as to transmit the first model update request and the model update response. Of course, a PDU session established during the model obtaining phase can also be used.

Optionally, the first model update request also includes at least one of the following: the subscription correlation information, the UE ID, the application ID, the first network function entity ID, for the NEF entity to determine the first network function entity and/or the global machine learning model. In this embodiment, model subscription context of the UE can be stored during model subscription, and then based on the model subscription context, the first network function entity for providing the global machine learning model for the UE is determined through the subscription correlation information, the UE ID, the application ID, and the first network function entity ID.

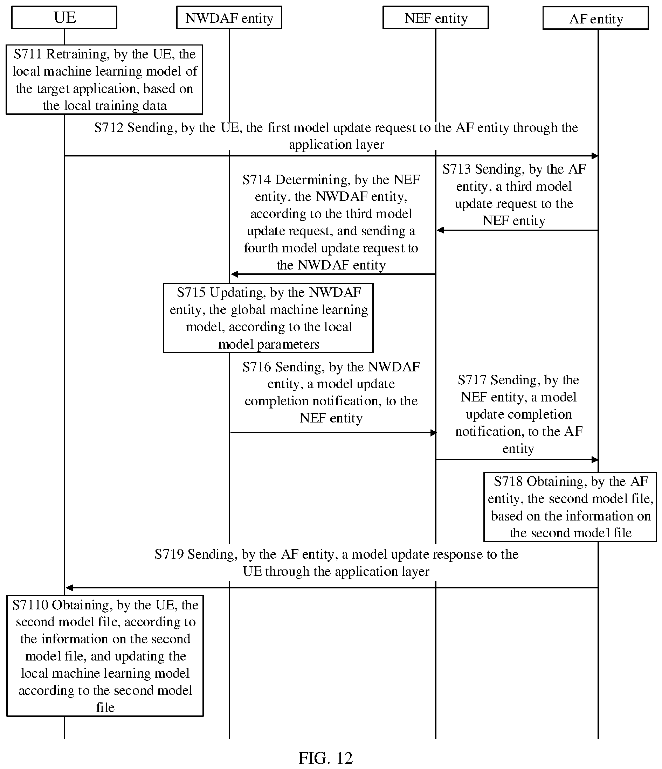

As an example, the above process of the embodiment is introduced in detail below with reference to a signaling diagram shown in FIG. 12, in which the first network function entity being the NWDAF entity is taken as an example.

S711, retraining, by the UE, the local machine learning model of the target application, based on the local training data.

S712, sending, by the UE, the first model update request to the AF entity through the application layer.

The first model update request includes the local model parameters and at least one of the following: the subscription correlation information, the UE ID, the application ID, and the NWDAF ID.

S713, sending, by the AF entity, a third model update request to the NEF entity.

The third model update request may include the local model parameters, and at least one local model parameter among the subscription correlation information, the UE ID, the application ID, and the NWDAF ID; the AF entity may extract required information from the first model update request and then generate a third model update request that can be sent to the NEF.

S714, determining, by the NEF entity, the NWDAF entity, according to the third model update request, and sending a fourth model update request to the NWDAF entity.

The fourth model update request includes the subscription correlation information and the local model parameters. The NEF entity can extract the required information from the third model update request and then generate the fourth model update request that can be sent to the NWDAF.

S715, updating, by the NWDAF entity, the global machine learning model, according to the local model parameters.

S716, sending, by the NWDAF entity, a model update completion notification, to the NEF entity.

The model update completion notification includes the model information and the subscription correlation information of the updated global machine learning model, and the model information includes the information on the second model file; the information on the second model file can be the following information: the updated global model parameter, or the second model file containing the updated global model parameter, or the address information of the second model file, or information on a network function entity (such as a database function entity) that stores the second model file, etc.

S717, sending, by the NEF entity, a model update completion notification, to the AF entity.

The model update completion notification includes the model information of the updated global machine learning model by the NWDAF entity, and may also include the subscription correlation information, where the model information includes the information on the second model file.

Optionally, S718, obtaining, by the AF entity, the second model file, based on the information on the second model file.

S719, sending, by the AF entity, a model update response to the UE through the application layer.

The model update response includes the information on the second model file, and may also include the subscription correlation information and the UE ID.

S7110, obtaining, by the UE, the second model file, according to the information on the second model file, and updating the local machine learning model according to the second model file. That is, the UE can update the local machine learning model based on the updated global model parameter in the second model file.

Through the above process, this embodiment can realize, through the application layer, federated learning of the machine learning model between the UE and the first network function entity for providing the model, improving the performance of sharing, transmitting and training the machine learning model between the UE and the network, and meeting the rapidly developing communication services and application demands.

### Embodiment 8

In this embodiment, possible implementations of S201-S204 in Embodiment 1 are introduced in detail.

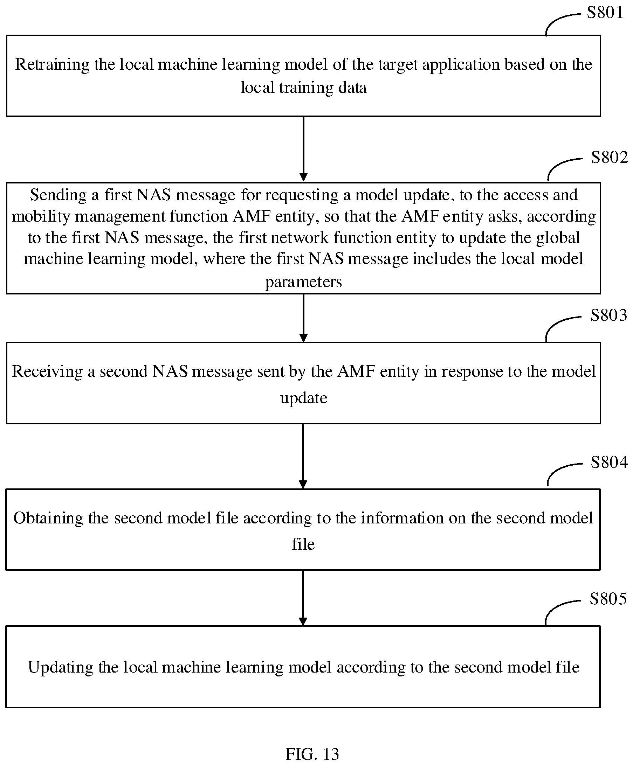

In this embodiment, the UE may transmit the local model parameters to the first network function entity through the AMF entity of the non-access stratum NAS after retraining the local machine learning model, and the first network function entity may update the global machine learning model and then transmit the information on the second model file of the updated global machine learning model to the UE through the AMF entity of the non-access stratum NAS, thereby realizing the update of the machine learning model on the user plane. As shown in FIG. 13, after the UE creates the local machine learning model and obtains the local training data, the above process specifically is as follows:
S801, retraining the local machine learning model of the target application based on the local training data;
S802, sending a first NAS message for requesting a model update, to the access and mobility management function AMF entity, so that the AMF entity asks, according to the first NAS message, the first network function entity to update the global machine learning model, where the first NAS message includes the local model parameters;
S803, receiving a second NAS message sent by the AMF entity in response to the model update;
where the second NAS message includes the information on the second model file, and the information on the second model file may include the updated global model parameter, or the second model file including the updated global model parameter, or the address information of the second model file; the model update response can also include the subscription correlation information, etc.;
S804, obtaining the second model file according to the information on the second model file;
S805, updating the local machine learning model according to the second model file.

Specifically, the updated global model parameter included in the second model file is obtained according to the information on the second model file, and the local machine learning model is updated according to the updated global model parameter included in the second model file.

In this embodiment, the UE sends the local model parameters to the first network function entity through the non-access stratum NAS on the control plane via the AMF entity, so that the first network function entity updates the global machine learning model. After updating the global machine learning model, the first network function entity may send the information on the second model file to the UE through the non-access stratum NAS via the AMF entity. The second model file includes the updated global model parameter.

Optionally, the first NAS message also includes at least one of the following: the subscription correlation information, the UE ID, the application ID, and the first network function entity ID, for the AMF entity to determine the first network function entity and/or the global machine learning model. In this embodiment, the AMF can store the model subscription context of the UE during model subscription, and then based on the model subscription context, determine the first network function entity for providing the global machine learning model for the UE, through the subscription correlation information, the UE ID, the application ID, and the first network function entity ID.

Optionally, the NAS message sent by the UE to the AMF entity may include but is not limited to an uplink non-access stratum transport (UL NAS Transport) message, a registration request (Registration Request) message, a service request (Service Request) message, etc.

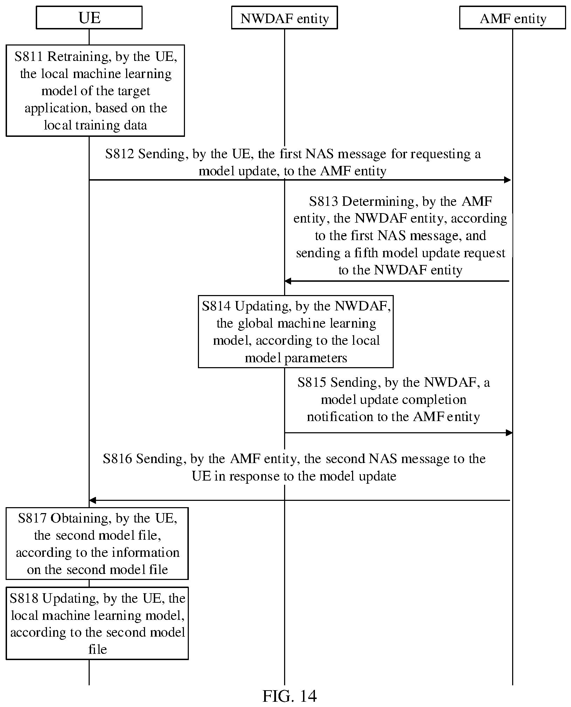

As an example, the above process of the embodiment is introduced in detail below with reference to a signaling diagram shown in FIG. 14, in which the first network function entity being the NWDAF entity is taken as an example.

S811, retraining, by the UE, the local machine learning model of the target application, based on the local training data.

S812, sending, by the UE, the first NAS message for requesting a model update, to the AMF entity.

The first model update request includes the local model parameters and at least one of the following: the subscription correlation information, the UE ID, the application ID, and the NWDAF ID; S813, determining, by the AMF entity, the NWDAF entity, according to the first NAS message, and sending a fifth model update request to the NWDAF entity.

The fifth model update request includes the local model parameters and may also include the subscription correlation information, etc.

S814, updating, by the NWDAF, the global machine learning model, according to the local model parameters.

S815, sending, by the NWDAF, a model update completion notification to the AMF entity.

The model update completion notification includes the model information and the subscription correlation information of the updated global machine learning model, and the model information includes the information on the second model file; the information on the second model file can be the following information: the updated global model parameter, or the address information of the second model file, or information on a network function entity (such as a database function entity) that stores the second model file.

S816, sending, by the AMF entity, the second NAS message to the UE in response to the model update.

The second NAS message includes the information on the second model file, and may also include the subscription correlation information.

S817, obtaining, by the UE, the second model file, according to the information on the second model file.

S818, updating, by the UE, the local machine learning model, according to the second model file. That is, the UE can update the local machine learning model based on the updated global model parameter in the second model file.

Through the above process, this embodiment can realize, through the non-access stratum NAS, federated learning of the machine learning model between the UE and the NWDAF for providing the model, improving the performance of sharing, transmitting and training machine learning models between the UE and the network, and meeting the rapidly developing communication services and application demands.

### Embodiment 9

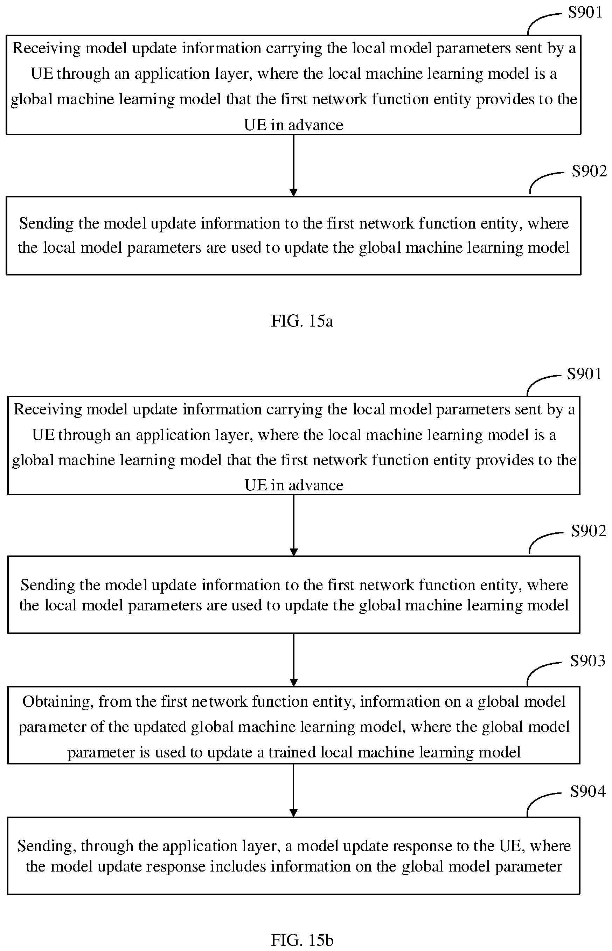

FIG. 15a is a flow chart of a machine learning model processing method provided by this embodiment. As shown in FIG. 15a, this embodiment provides a machine learning model processing method. The execution body is the AF entity. The specific steps of the machine learning model processing method are as follows:
S901, receiving model update information carrying the local model parameters sent by a UE through an application layer, where the local machine learning model is a global machine learning model that a first network function entity provides to the UE in advance; and
S902, sending the model update information to the first network function entity, where the local model parameters are used to update the global machine learning model.

Based on the above embodiment, as shown in FIG. 15b, after S902, following steps may further be included:
S903, obtaining, from the first network function entity, information on a global model parameter of the updated global machine learning model, where the global model parameter is used to update a trained local machine learning model; and
S904, sending, through the application layer, a model update response to the UE, where the model update response includes information on the global model parameter;
where the global model parameter is obtained by the first network function entity by updating the global machine learning model using the local model parameters sent by at least one UE.

The federated learning method for the mobile network provided by this embodiment is the method on the AF entity side in the above embodiments. The principles and technical effects thereof can be found in the above embodiments and will not be described again here.

Based on the above embodiment, the sending the model update information to the first network function entity may specifically include:
directly sending the model update information to the first network function entity if the AF entity is a trusted AF entity; or
sending, through an NEF entity, the model update information to the first network function entity if the AF entity is an untrusted AF entity.

Further, the obtaining, from the first network function entity, the information on the global model parameter of the updated global machine learning model includes:
obtaining, from the first network function entity directly or through an NEF entity, the information on the global model parameter of the updated global machine learning model.

In this embodiment, the model update information may be a first model update request sent by the UE through the application layer. The first model update request includes the local model parameters and at least one of the following: the subscription correlation information, the UE ID, the application ID, the first network function entity ID.

In an optional embodiment, the AF entity is a trusted AF entity; the AF entity can determine the first network function entity according to the first model update request, and send a second model update request to the first network function entity. The second model update request includes the subscription correlation information and the local model parameters. The AF entity can extract the required information from the first model update request and then generate the second model update request that can be sent to the NWDAF.

Further, the AF entity may also receive a model update completion notification sent by the first network function entity, where the model update completion notification includes model information of the updated global machine learning model, and may also include the subscription correlation information. The model information includes the information on the second model file; optionally, the AF entity can obtain the second model file according to the information on the second model file.

In another optional embodiment, the AF entity is an untrusted AF entity; the AF entity may send a third model update request to the NEF entity, where the third model update request includes the local model parameters and at least one of the subscription correlation information, the UE ID, the application ID, the first network function entity ID, so that the NEF entity determines the first network function entity according to the third model update request, and sends a fourth model update request to the first network function entity. The fourth model update request may include the local model parameters, and may also include the subscription correlation information, etc. The AF entity can extract the required information from the first model update request and then generate the third model update request that can be sent to the NEF; the NEF entity can extract the required information from the third model update request and then generate the fourth model update request that can be sent to the first network function entity.

Further, the AF entity may also receive a model update completion notification sent by the NEF entity. The model update completion notification includes the model information of the updated global machine learning model by the first network function entity, and may also include the subscription correlation information, etc. The model information includes the information on the second model file; optionally, the AF entity can obtain the second model file according to the information on the second model file.

Based on the above embodiment, the AF entity may send the model update response to the UE through the application layer, where the model update response includes the information on the second model file, and may also include the subscription correlation information, the UE ID, etc.

In one or more possible embodiments, before the receiving the model update information carrying the local model parameters sent by the UE through the application layer in S901, following steps may further be included:
receiving model obtaining information carrying a UE ID and/or model description information sent by the UE through the application layer;
sending the model obtaining information to the first network function entity, according to the UE ID and/or the model description information; and
obtaining, from the first network function entity, information on a first model file of the global machine learning model and sending, through the application layer, the information on the first model file of the global machine learning model to the UE.

The model description information includes at least one of the following: an application ID, an application feature ID, time information, location information, and other model characteristic information.

Based on the above embodiment, the sending the model obtaining information to the first network function entity, according to the UE ID and/or the model description information includes:
if the AF entity is a trusted AF entity, selecting the first network function entity that serves the UE and/or that can provide the global machine learning model that satisfies the model description information, and sending the model obtaining information to the first network function entity; or,
if the AF entity is an untrusted AF entity, sending the model obtaining information to an NEF entity, selecting, by the NEF entity, the first network function entity that serves the UE and/or that can provide the global machine learning model that satisfies the model description information, and sending the model obtaining information to the first network function entity. In this embodiment, optionally, the AF entity is a trusted AF entity; the AF entity can select, according to the first model obtaining request, an alternative first network function entity serving the UE and/or an alternative first network function entity that can provide the global machine learning model that satisfies the model description information, to be determined as the first network function entity; and then send a second model obtaining request to the first network function entity, where the second model obtaining request may include the UE ID and/or the model description information, so that the first network function entity determines the global machine learning model and generates subscription correlation information for the UE, where the AF entity may extract the required information from the first model obtaining request and then generate the second model obtaining request that can be sent to the NWDAF. Finally, the AF entity receives a model obtaining notification sent by the first network function entity, where the model obtaining notification includes model information of the global machine learning model and subscription correlation information, and the model information includes the information on the first model file.

Optionally, the first model file is obtained according to the information on the first model file.

Optionally, the AF entity may also be an untrusted AF entity; the AF entity may send a third model obtaining request to the NEF entity according to the first model obtaining request, where the third model obtaining request includes the UE ID and/or the model description information, so that the NEF entity selects an alternative first network function entity serving the UE and/or an alternative first network function entity that can provide the global machine learning model that satisfies the model description information, to be determined as the first network function entity, and sends a fourth model obtaining request to the first network function entity, where the fourth model obtaining request includes the UE ID and/or the model description information, so that the first network function entity determines the global machine learning model and generates subscription correlation information for the UE, where the AF entity can extract the required information from the first model obtaining request and generate the third model obtaining request that can be sent to the NEF. The NEF entity can extract the required information from the third model obtaining request and generate the fourth model obtaining request that can be sent to the NWDAF. The AF entity receives a model obtaining notification sent by the NEF entity, where the model obtaining notification includes model information of the global machine learning model and subscription correlation information provided by the first network function entity, and the model information includes information on the first model file.

Optionally, the first model file is obtained according to the information on the first model file.

Based on the above embodiments, the obtaining, from the first network function entity, the information on the first model file of the global machine learning model and sending, through the application layer, the information on the first model file of the global machine learning model to the UE includes:
obtaining, from the first network function entity directly or through an NEF entity, the information on the first model file of the global machine learning model; and
sending, through the application layer, a model obtaining response to the UE, where the model obtaining response includes the information on the first model file, and is used to obtain the first model file according to the information on the first model file. Optionally, the model obtaining response may also subscription correlation information, a UE ID, etc. In one or more possible embodiments, the method further includes:
   establishing a PDU session between the UE and the AF entity to connect the UE and the AF entity at the application layer, where the PDU session includes: a PDU session dedicated to transmitting machine learning model data, or a PDU session dedicated to carrying specific application data.

In one or more possible embodiments, the first network function entity is a NWDAF entity.

### Embodiment 10

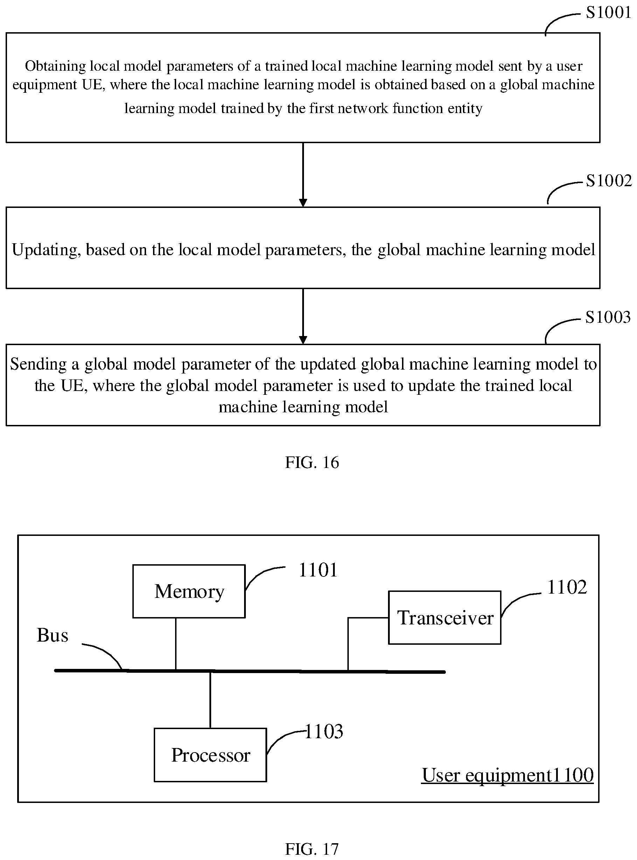

FIG. 16 is a flow chart of a machine learning model processing method provided in this embodiment. As shown in FIG. 16, this embodiment provides a method. The execution body is the first network function entity for providing a model. The specific steps of the machine learning model processing method are as follows:
S 1001, obtaining local model parameters of a trained local machine learning model sent by a user equipment UE, where the local machine learning model is obtained based on a global machine learning model trained by the first network function entity; and
S 1002, updating, based on the local model parameters, the global machine learning model.

Further, after the updating, based on the local model parameters, the global machine learning model, a following step may further be included:
S 1003, sending a global model parameter of the updated global machine learning model to the UE, where the global model parameter is used to update the trained local machine learning model;
where the global model parameter is obtained by the first network function entity by updating the global machine learning model using the local model parameters sent by at least one UE.

Based on the above embodiments, before the obtaining the local model parameters of the trained local machine learning model sent by the user equipment UE, a following step may further be included:
sending information on a first model file of the global machine learning model to the UE, so that the UE creates the local machine learning model according to the first model file.

As an example, the specific steps of the machine learning model processing method executed by the first network function entity are as follows: the machine learning model processing method provided in this embodiment is the method on the side of the first network function entity in the above embodiments, and the principles and technical effects thereof can be seen in the above embodiments and will not be described again here.

In one or more possible embodiments, the obtaining the local model parameters of the trained local machine learning model sent by the user equipment UE includes:
receiving a second model update request sent by an AF entity directly or through a NEF entity, where the second model update request is sent by the AF entity after receiving a first model update request sent by the UE through the application layer, and the second model update request includes local model parameters, and may also include subscription correlation information, etc.; and obtaining the local model parameters from the second model update request; or
receiving a fifth model update request sent by an AMF entity, where the fifth model update request is sent by the AMF entity after receiving a first NAS message for requesting a model update sent by the UE, and the fifth model update request includes the local model parameters and may also include subscription correlation information, etc.; and obtaining the local model parameters from the fifth model update request.

In one or more possible embodiments, before the obtaining the local model parameters of the trained local machine learning model sent by the user equipment UE, following steps are further included:
receiving, from the UE, an obtaining request for the global machine learning model;
determining the global machine learning model based on the obtaining request; and
sending the information on the first model file of the global machine learning model to the UE, so that the UE creates the local machine learning model according to the first model file.

For the case of model subscription, subscription correlation information may also be generated for the UE. The subscription correlation information may be a subscription correlation ID (Subscription Correlation ID). Different UEs subscribing to a same model may be assigned with a same subscription correlation ID, or different UEs subscribing to the same model may be assigned with different subscription correlation IDs.

In one or more possible embodiments, the receiving, from the UE, the obtaining request for the global machine learning model may specifically include:
receiving a second model obtaining request sent by an AF entity directly or through a NEF entity, where the second model obtaining request is sent by the AF entity after receiving a first model obtaining request sent by the UE through the application layer, and the second model obtaining request includes a UE ID and/or model description information; or
receiving a fifth model obtaining request sent by an AMF entity, where the fifth model obtaining request is sent by the AMF entity after receiving a third NAS message for obtaining the model sent by the UE, and the fifth model obtaining request includes the UE ID and/or the model description information.

Based on the above embodiments, the sending the information on the first model file of the global machine learning model to the UE includes:
sending a model obtaining notification to the AF entity or the AMF entity, or sending the model obtaining notification to the AF entity through the NEF entity, where the model obtaining notification includes model information of the global machine learning model, and may also include subscription correlation information, etc. The model information includes the information on the first model file, so that the second function entity sends the information on the first model file to the UE.

In one or more possible embodiments, the first network function entity is a NWDAF entity.

### Embodiment 11

FIG. 17 is a structural diagram of a user equipment according to an embodiment of the present disclosure. The user equipment provided in this embodiment can execute the processing flow provided by the method embodiments on the user equipment side. As shown in FIG. 17, the user equipment 1100 includes a memory 1101, a transceiver 1102, and a processor 1103.

In FIG. 17, a bus architecture may include any number of interconnected buses and bridges, and specifically various circuits of one or more processors represented by the processor 1103 and the memory represented by the memory 1101 are linked together. The bus architecture can also link together various other circuits such as peripherals, voltage regulators, and power management circuits, which are all well known in the art and therefore no further description will be given herein. The bus interface provides the interface. The transceiver 1102 may be a plurality of elements, i.e., including a transmitter and a receiver, providing a unit for communicating with various other devices over transmission media including wireless channels, wired channels, optical cables, and other transmission media. The processor 1103 is responsible for managing the bus architecture and general processing, and the memory 1101 can store data used by the processor 1103 when performing operations.

The processor 1103 may be a central processing unit (CPU), an application specific integrated circuit (Application Specific Integrated Circuit, ASIC), a field programmable gate array (Field-Programmable Gate Array, FPGA) or a complex programmable logic device (Complex Programmable Logic Device, CPLD). The processor can also adopt a multi-core architecture.

The memory 1101 is configured to store a computer program; the transceiver 1102 is configured to send and receive data under a control of the processor 1103; the processor 1103 is configured to read the computer program in the memory 1101 and perform following operations:
determine local training data related to a target application;
train, according to the local training data, a local machine learning model for the target application, to obtain local model parameters of the trained local machine learning model, where the local machine learning model is obtained based on a global machine learning model trained by a first network function entity; and
send the local model parameters to the first network function entity, where the local model parameters are used to update the global machine learning model.

In one or more possible embodiments, the processor 1103 is further configured to:
obtain, from the first network function entity, a global model parameter of the updated global machine learning model, where the global model parameter is used to update the trained local machine learning model;
where the global model parameter is obtained by the first network function entity by updating the global machine learning model using the local model parameters sent by at least one UE.

In one or more possible embodiments, the processor 1103, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, where the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

In one or more possible embodiments, the model update information further includes any one or more of the following: a UE ID, an application ID, a first network function entity ID, for the AF entity or the AMF entity to determine the first network function entity and/or the global machine learning model.

In one or more possible embodiments, the processor 1103, when obtaining, from the first network function entity, the global model parameter of the updated global machine learning model, is configured to:
receive a model update response sent by the AF entity or the AMF entity, where the model update response includes information on the global model parameter of the updated global machine learning model.

In one or more possible embodiments, the processor 1103, when obtaining the local machine learning model based on the global machine learning model trained by the first network function entity, is configured to:
obtain, from the first network function entity, a first model file of the global machine learning model; and
create the local machine learning model based on the first model file.

In one or more possible embodiments, the processor 1103, when obtaining, from the first network function entity, the first model file of the global machine learning model, is configured to:
send, to the first network function entity, model obtaining information carrying a UE ID and/or model description information; and
obtain, from the first network function entity, information on the first model file of the global machine learning model which is provisioned based on the model obtaining information.

In one or more possible embodiments, the processor 1103, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, where the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

In one or more possible embodiments, the processor 1103, when obtaining, from the first network function entity, the first model file of the global machine learning model, is configured to:
receive a model obtaining response sent by an AF entity or an AMF entity, where the model obtaining response includes the information on the first model file, and is used to obtain the first model file according to the information on the first model file.

In one or more possible embodiments, the model description information includes at least one of the following:
an application ID, an application feature ID, time information, location information, and other model characteristic information.

The user equipment provided by the embodiments of the present disclosure can be specifically configured to execute the above method embodiments on the user equipment side, and the specific functions will not be described again here.

### Embodiment 12

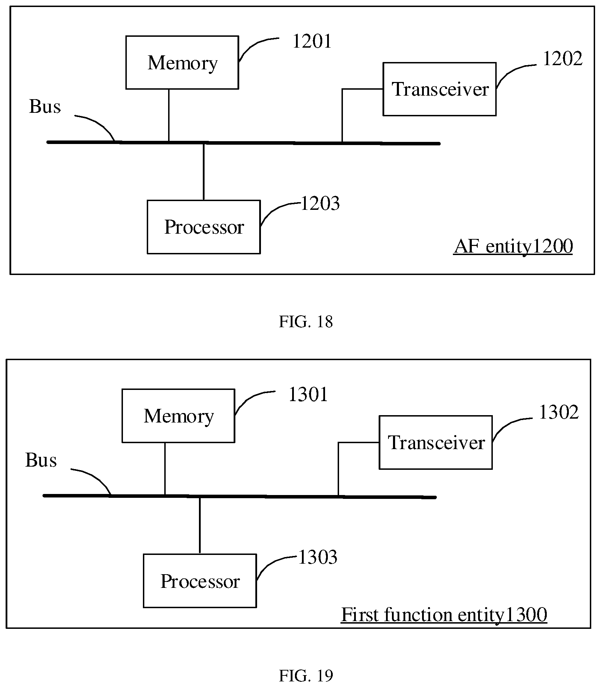

FIG. 18 is a structural diagram of an AF entity according to an embodiment of the present disclosure. The AF entity provided by this embodiment can execute the processing flow provided by the method embodiments on the AF entity side. As shown in FIG. 18, the AF entity 1200 includes a memory 1201, a transceiver 1202, and a processor 1203.

In FIG. 18, a bus architecture may include any number of interconnected buses and bridges, and specifically various circuits of one or more processors 1203 represented by the processor 1203 and the memory represented by the memory 1201 are linked together. The bus architecture can also link together various other circuits such as peripherals, voltage regulators, and power management circuits, which are all well known in the art and therefore no further description will be given herein. The bus interface provides the interface. The transceiver 1202 may be a plurality of elements, i.e., including a transmitter and a receiver, providing a unit for communicating with various other devices over transmission media including wireless channels, wired channels, optical cables, and other transmission media. The processor 1203 is responsible for managing the bus architecture and general processing, and the memory 1201 can store data used by the processor 1203 when performing operations.

The processor 1203 may be a central processing unit (CPU), an application specific integrated circuit (ASIC), a field programmable gate array (FPGA) or a complex programmable logic device (CPLD). The processor 1203 can also adopt a multi-core architecture.

The memory 1201 is configured to store a computer program; the transceiver 1202 is configured to send and receive data under a control of the processor 1203; the processor 1203 is configured to read the computer program in the memory 1201 and perform following operations:
receive model update information carrying the local model parameters sent by a UE through a user plane, where the local machine learning model is a global machine learning model that a first network function entity provides to the UE in advance; and
send the model update information to the first network function entity, where the local model parameters are used to update the global machine learning model.

In one or more possible embodiments, the processor 1203 is further configured to:
obtain, from the first network function entity, information on a global model parameter of the updated global machine learning model, where the global model parameter is used to update a trained local machine learning model; and
send, through the user plane, a model update response to the UE, where the model update response includes information on the global model parameter;
where the global model parameter is obtained by the first network function entity by updating the global machine learning model using the local model parameters sent by at least one UE.

In one or more possible embodiments, the processor 1203, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

In one or more possible embodiments, the processor 1203, when obtaining, from the first network function entity, the information on the global model parameter of the updated global machine learning model, is configured to:
obtain, from the first network function entity directly or through an NEF entity, the information on the global model parameter of the updated global machine learning model.

In one or more possible embodiments, the processor 1203, before receiving the model update information carrying the local model parameters sent by the UE through the user plane, is further configured to:
receive model obtaining information carrying a UE ID and/or model description information sent by the UE through the user plane;
send the model obtaining information to the first network function entity, according to the UE ID and/or the model description information; and
obtain, from the first network function entity, information on a first model file of the global machine learning model and send, through the user plane, the information on the first model file of the global machine learning model to the UE.

In one or more possible embodiments, the processor 1203, when sending the model obtaining information to the first network function entity, according to the UE ID and/or the model description information, is configured to:
if the AF entity is a trusted AF entity, select the first network function entity that serves the UE and/or that can provide the global machine learning model that satisfies the model description information, and send the model obtaining information to the first network function entity; or,
if the AF entity is an untrusted AF entity, send the model obtaining information to an NEF entity, select, by the NEF entity, the first network function entity that serves the UE and/or that can provide the global machine learning model that satisfies the model description information, and send the model obtaining information to the first network function entity.

In one or more possible embodiments, the processor 1203, when obtaining, from the first network function entity, the information on the first model file of the global machine learning model and sending, through the user plane, the information on the first model file of the global machine learning model to the UE, is configured to:
obtain, from the first network function entity directly or through an NEF entity, the information on the first model file of the global machine learning model; and
send, through the user plane, a model obtaining response to the UE, where the model obtaining response includes the information on the first model file, and is used to obtain the first model file according to the information on the first model file.

The AF entity provided by this embodiment of the present disclosure can be specifically configured to execute the above method embodiments on the AF entity side, and the specific functions will not be described again here.

### Embodiment 13

FIG. 19 is a structural diagram of a first network function entity for providing a model according to an embodiment of the present disclosure. The first network function entity for providing the model provided in this embodiment can execute the processing flow provided by the method embodiments on the side of the first network function entity for providing the model. As shown in FIG. 19, the first network function entity 1300 for providing the model includes a memory 1301, a transceiver 1302, and a processor 1303.

In FIG. 19, a bus architecture may include any number of interconnected buses and bridges, and specifically various circuits of one or more processors 1303 represented by the processor 1303 and the memory represented by the memory 1301 are linked together. The bus architecture can also link together various other circuits such as peripherals, voltage regulators, and power management circuits, which are all well known in the art and therefore no further description will be given herein. The bus interface provides the interface. The transceiver 1302 may be a plurality of elements, i.e., including a transmitter and a receiver, providing a unit for communicating with various other devices over transmission media including wireless channels, wired channels, optical cables, and other transmission media. The processor 1303 is responsible for managing the bus architecture and general processing, and the memory 1301 can store data used by the processor 1303 when performing operations.

The processor 1303 can be a central processing unit (CPU), an application specific integrated circuit (ASIC), a field programmable gate array (FPGA) or a complex programmable logic device (CPLD). The processor 1303 can also adopt a multi-core architecture.

The memory 1301 is configured to store a computer program; the transceiver 1302 is configured to send and receive data under a control of the processor 1303; the processor 1303 is configured to read the computer program in the memory 1301 and perform following operations:
obtain local model parameters of a trained local machine learning model sent by a user equipment UE, where the local machine learning model is obtained based on a global machine learning model trained by the first network function entity; and
update, based on the local model parameters, the global machine learning model.

In one or more possible embodiments, the processor 1303, after updating, based on the local model parameters, the global machine learning model, is further configured to:
send a global model parameter of the updated global machine learning model to the UE, where the global model parameter is used to update the trained local machine learning model;
where the global model parameter is obtained by the first network function entity by updating the global machine learning model using the local model parameters sent by at least one UE.

In one or more possible embodiments, the processor 1303, before obtaining the local model parameters of the trained local machine learning model sent by the user equipment UE, is further configured to:
send information on a first model file of the global machine learning model to the UE, so that the UE creates the local machine learning model according to the first model file.

The first network function entity for providing the model provided in the embodiment of the present disclosure can be specifically configured to execute the above method embodiments on the first network function entity side, and the specific functions will not be described again here.

### Embodiment 14

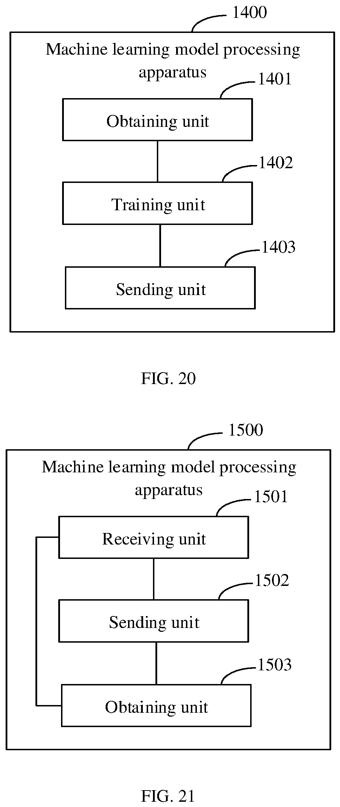

FIG. 20 is a structural diagram of a machine learning model processing apparatus provided by an embodiment of the present disclosure. The machine learning model processing apparatus provided by this embodiment can execute the processing flow provided by the method embodiments on the UE side. As shown in FIG. 20, the machine learning model processing apparatus 1400 includes an obtaining unit 1401, a training unit 1402, and a sending unit 1403.

The obtaining unit 1401 is configured to determine local training data related to a target application.

The training unit 1402 is configured to train, according to the local training data, a local machine learning model for the target application, to obtain local model parameters of the trained local machine learning model, where the local machine learning model is obtained based on a global machine learning model trained by a first network function entity.

The sending unit 1403 is configured to send the local model parameters to the first network function entity, where the local model parameters are used to update the global machine learning model.

In one or more possible embodiments, the obtaining unit 1401 is further configured to obtain, from the first network function entity, a global model parameter of the updated global machine learning model;
the training unit 1402 is further configured to update the trained local machine learning model according to the global model parameter;
where the global model parameter is obtained by the first network function entity by updating the global machine learning model using the local model parameters sent by at least one UE.

In one or more possible embodiments, the sending unit 1403, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, where the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

In one or more possible embodiments, the model update information further includes any one or more of the following: a UE ID, an application ID, a first network function entity ID, for the AF entity or the AMF entity to determine the first network function entity and/or the global machine learning model.

In one or more possible embodiments, the obtaining unit 1401, when obtaining, from the first network function entity, the global model parameter of the updated global machine learning model, is configured to:
receive a model update response sent by the AF entity or the AMF entity, where the model update response includes information on the global model parameter of the updated global machine learning model.

In one or more possible embodiments, the obtaining unit 1401 is further configured to obtain, from the first network function entity, a first model file of the global machine learning model;
the training unit 1402 is further configured to create the local machine learning model based on the first model file.

In one or more possible embodiments, the obtaining unit 1401, when obtaining, from the first network function entity, the first model file of the global machine learning model, is configured to:
send, through the sending unit 1403, to the first network function entity, model obtaining information carrying a UE ID and/or model description information; and
obtain, from the first network function entity, information on the first model file of the global machine learning model which is provisioned based on the model obtaining information.

In one or more possible embodiments, the sending unit 1403, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, where the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

In one or more possible embodiments, the obtaining unit 1401 obtaining, from the first network function entity, the first model file of the global machine learning model includes:
receive a model obtaining response sent by an AF entity or an AMF entity, where the model obtaining response includes the information on the first model file, and is used to obtain the first model file according to the information on the first model file.

In one or more possible embodiments, the model description information includes at least one of the following:
an application ID, an application feature ID, time information, location information, and other model characteristic information.

The machine learning model processing apparatus provided by the embodiment of the present disclosure can be specifically configured to execute the above method embodiments on the UE side, and the specific functions will not be described again here.

### Embodiment 15

FIG. 21 is a structural diagram of a machine learning model processing apparatus provided by an embodiment of the present disclosure. The machine learning model processing apparatus provided by this embodiment can execute the processing flow provided by the method embodiments on the AF entity side. As shown in FIG. 21, the machine learning model processing apparatus 1500 includes: a receiving unit 1501, a sending unit 1502, and an obtaining unit 1503.

The receiving unit 1501 is configured to receive model update information carrying the local model parameters sent by a UE through a user plane, where the local machine learning model is a global machine learning model that a first network function entity provides to the UE in advance.

The sending unit 1502 is configured to send the model update information to the first network function entity, where the local model parameters are used to update the global machine learning model.

In one or more possible embodiments, the following is further included:
the obtaining unit 1503 is configured to obtain, from the first network function entity, information on a global model parameter of the updated global machine learning model, where the global model parameter is used to update a trained local machine learning model;
the sending unit 1502 is further configured to send, through the user plane, a model update response to the UE, where the model update response includes information on the global model parameter;
where the global model parameter is obtained by the first network function entity by updating the global machine learning model using the local model parameters sent by at least one UE.

In one or more possible embodiments, the sending unit 1502, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

In one or more possible embodiments, the obtaining unit 1503, when obtaining, from the first network function entity, the information on the global model parameter of the updated global machine learning model, is configured to:
obtain, from the first network function entity directly or through an NEF entity, the information on the global model parameter of the updated global machine learning model.

In one or more possible embodiments, before receiving the model update information carrying the local model parameters sent by the UE through the user plane, following is further included:
the receiving unit 1501 is further configured to receive model obtaining information carrying a UE ID and/or model description information sent by the UE through the user plane;
the sending unit 1502 is further configured to send the model obtaining information to the first network function entity, according to the UE ID and/or the model description information;
the obtaining unit 1503 is further configured to obtain, from the first network function entity, information on a first model file of the global machine learning model;
the sending unit 1502 is further configured to send, through the user plane, the information on the first model file of the global machine learning model to the UE. In one or more possible embodiments,

The machine learning model processing apparatus provided by the embodiment of the present disclosure can be specifically configured to execute the above method embodiments on the AF entity side, and the specific functions will not be described again here.

### Embodiment 16

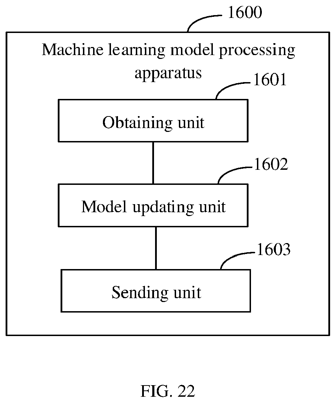

FIG. 22 is a structural diagram of a machine learning model processing apparatus provided by an embodiment of the present disclosure. The machine learning model processing apparatus provided by this embodiment can execute the processing flow provided by the method embodiments on the side of the first network function entity for providing the model. As shown in FIG. 22, the machine learning model processing apparatus 1600 includes: an obtaining unit 1601, a model updating unit 1602, and a sending unit 1603.

The obtaining unit 1601 is configured to obtain local model parameters of a trained local machine learning model sent by a user equipment UE, where the local machine learning model is obtained based on a global machine learning model trained by the first network function entity.

The model updating unit 1602 is configured to update, based on the local model parameters, the global machine learning model.

In one or more possible embodiments, the following is further included:
the sending unit 1603 is configured to send a global model parameter of the updated global machine learning model to the UE, where the global model parameter is used to update the trained local machine learning model;
where the global model parameter is obtained by the first network function entity by updating the global machine learning model using the local model parameters sent by at least one UE.

In one or more possible embodiments, the sending unit 1603, before obtaining the local model parameters of the trained local machine learning model sent by the user equipment UE, is further configured to:
send information on a first model file of the global machine learning model to the UE, so that the UE creates the local machine learning model according to the first model file.

The machine learning model processing apparatus provided by the embodiment of the present disclosure can be specifically configured to execute the method embodiments on the side of the first network function entity, and the specific functions will not be described again here.

It should be noted that the division of units in the above embodiments of the present disclosure is as an example and is merely a logical function division. In actual implementation, there may be other division modes. In addition, each functional unit in various embodiments of the present disclosure may be integrated into one processing unit, or each unit may exist physically alone, or two or more units may be integrated into one unit. The above integrated units can be implemented in the form of hardware or software functional units.

When the integrated unit is implemented in the form of a software functional unit and sold or used as an independent product, the integrated unit may be stored in a computer readable storage medium. Based on such an understanding, the technical solutions of the present disclosure essentially, or all or a part of the technical solutions may be implemented in the form of a software product. The computer software product is stored in a storage medium and includes several instructions for instructing a computer device (which may be a personal computer, a server, a network device, or the like) or a processor (processor) to perform all or some steps of the methods described in the embodiments of the present disclosure. The foregoing storage medium includes any medium that can store program code, such as a USB flash drive, a removable hard disk, a Read-Only Memory (Read-Only Memory, ROM) ROM, a Random Access Memory (Random Access Memory, RAM), a magnetic disk, or an optical disk, etc.

### Embodiment 17

Embodiment 11 of the present disclosure provides a computer-readable storage medium. The computer-readable storage medium stores a computer program. The computer program is configured to cause a processor to execute the machine learning model processing method on the UE side.

### Embodiment 18

Embodiment 11 of the present disclosure provides a computer-readable storage medium. The computer-readable storage medium stores a computer program. The computer program is configured to cause a processor to execute the machine learning model processing method on the AF entity side.

### Embodiment 19

Embodiment 11 of the present disclosure provides a computer-readable storage medium. The computer-readable storage medium stores a computer program. The computer program is configured to cause a processor to execute the machine learning model processing method on the side of the first network function entity for providing the model.

The computer-readable storage medium may be any available medium or data storage device that the processor can access, including but not limited to magnetic storage (such as a floppy disk, a hard disk, a tape, a magneto-optical disk (MO), etc.), optical storage (such as a CD, a DVD, a BD, a HVD, etc.), and semiconductor storage (such as a ROM, an EPROM, an EEPROM, a nonvolatile memory (NAND FLASH), a solid state drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having a computer-usable program code embodied therein.

The present disclosure is described with reference to flowchart illustrations and/or block diagrams of methods, apparatus (systems), and computer program products according to embodiments of the disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, a special-purpose computer, an embedded processor, or other programmable data processing device to produce a machine such that the instructions executed by the processor of the computer or other programmable data processing device produce means for implementing the functions specified in a process or processes in a flowchart and/or in a block or blocks in a block diagram.

These processor-executable instructions may also be stored in a processor-readable memory that causes a computer or other programmable data processing device to operate in a particular manner, such that instructions stored in the processor-readable memory generates a manufactured product including an instruction means. The instruction means implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the instructions that are executed on the computer or other programmable device to provide steps for implementing the functions specified in a process or processes of the flowchart diagrams and/or a block or blocks of the block diagrams.

Obviously, those skilled in the art can make various changes and modifications to the present disclosure without departing from the spirit and scope of the disclosure. In this way, if these changes and modifications of the present disclosure fall within the scope of the claims and equivalent technologies of the present disclosure, the present disclosure is also intended to include these changes and modifications.

## Claims

1. A machine learning model processing method, applied to a user equipment UE, and comprising:
determining local training data related to a target application;
training, according to the local training data, a local machine learning model for the target application, to obtain local model parameters of the trained local machine learning model, wherein the local machine learning model is obtained based on a global machine learning model trained by a first network function entity; and
sending the local model parameters to the first network function entity, wherein the local model parameters are used to update the global machine learning model.

2. The method according to claim 1, further comprising:
obtaining, from the first network function entity, a global model parameter of the updated global machine learning model, wherein the global model parameter is used to update the trained local machine learning model;
wherein the global model parameter is obtained by the first network function entity by updating the global machine learning model using the local model parameters sent by at least one UE.

3. The method according to claim 1 or 2, wherein the sending the local model parameters to the first network function entity comprises:
sending, through a user plane, model update information carrying the local model parameters, to an application function AF entity, so that the model update information is sent to the first network function entity through the AF entity; or,
sending, through the user plane, the model update information carrying the local model parameters, to the application function AF entity, wherein the AF entity sends the model update information to the first network function entity through a network exposure function NEF entity; or,
sending, through a non-access stratum, the model update information carrying the local model parameters, to an access and mobility management function AMF entity, so that the model update information is sent to the first network function entity through the AMF entity.

4. The method according to claim 3, wherein the model update information further comprises any one or more of the following: a UE ID, an application ID, a first network function entity ID, for the AF entity or the AMF entity to determine the first network function entity and/or the global machine learning model.

5. The method according to claim 3, wherein the obtaining, from the first network function entity, the global model parameter of the updated global machine learning model comprises:
receiving a model update response sent by the AF entity or the AMF entity, wherein the model update response comprises information on the global model parameter of the updated global machine learning model.

6. The method according to claim 1, wherein the obtaining the local machine learning model based on the global machine learning model trained by the first network function entity comprises:
obtaining, from the first network function entity, a first model file of the global machine learning model; and
creating the local machine learning model based on the first model file.

7. The method according to claim 6, wherein the obtaining, from the first network function entity, the first model file of the global machine learning model comprises:
sending, to the first network function entity, model obtaining information carrying a UE ID and/or model description information; and
obtaining, from the first network function entity, information on the first model file of the global machine learning model which is provisioned based on the model obtaining information.

8. The method according to claim 7, wherein the sending, to the first network function entity, the model obtaining information carrying the UE ID and/or the model description information comprises:
sending, through a user plane, the model obtaining information carrying the UE ID and/or the model description information, to an AF entity, so that the model obtaining information is sent to the first network function entity through the AF entity according to the UE ID and/or the model description information; or,
sending, through the user plane, the model obtaining information carrying the UE ID and/or the model description information, to the AF entity, wherein the AF entity sends the model obtaining information to the first network function entity through an NEF entity according to the UE ID and/or the model description information; or,
sending, through a non-access stratum, the model obtaining information carrying the UE ID and/or the model description information, to an AMF entity, so that the model obtaining information is sent to the first network function entity through the AMF entity according to the UE ID and/or the model description information.

9. The method according to claim 7 or 8, wherein the obtaining, from the first network function entity, the first model file of the global machine learning model comprises:
receiving a model obtaining response sent by an AF entity or an AMF entity, wherein the model obtaining response comprises the information on the first model file, and is used to obtain the first model file according to the information on the first model file.

10. The method according to claim 7 or 8, wherein the model description information comprises at least one of the following:
an application ID, an application feature ID, time information, location information, and other model characteristic information.

11. A machine learning model processing method, applied to an application function AF entity, and comprising:
receiving model update information carrying local model parameters sent by a UE through a user plane, wherein the local machine learning model is a global machine learning model that a first network function entity provides to the UE in advance; and
sending the model update information to the first network function entity, wherein the local model parameters are used to update the global machine learning model.

12. The method according to claim 11, further comprising:
obtaining, from the first network function entity, information on a global model parameter of the updated global machine learning model, wherein the global model parameter is used to update a trained local machine learning model; and
sending, through the user plane, a model update response to the UE, wherein the model update response comprises information on the global model parameter;
wherein the global model parameter is obtained by the first network function entity by updating the global machine learning model using the local model parameters sent by at least one UE.

13. The method according to claim 11, wherein the sending the model update information to the first network function entity comprises:
directly sending the model update information to the first network function entity if the AF entity is a trusted AF entity; or
sending, through an NEF entity, the model update information to the first network function entity if the AF entity is an untrusted AF entity.

14. The method according to claim 12, wherein the obtaining, from the first network function entity, the information on the global model parameter of the updated global machine learning model comprises:
obtaining, from the first network function entity directly or through an NEF entity, the information on the global model parameter of the updated global machine learning model.

15. The method according to claim 11, wherein before the receiving the model update information carrying the local model parameters sent by the UE through the user plane, the method further comprises:
receiving model obtaining information carrying a UE ID and/or model description information sent by the UE through the user plane;
sending the model obtaining information to the first network function entity, according to the UE ID and/or the model description information; and
obtaining, from the first network function entity, information on a first model file of the global machine learning model and sending, through the user plane, the information on the first model file of the global machine learning model to the UE.

16. The method according to claim 15, wherein the sending the model obtaining information to the first network function entity, according to the UE ID and/or the model description information comprises:
if the AF entity is a trusted AF entity, selecting the first network function entity that serves the UE and/or that can provide the global machine learning model that satisfies the model description information, and sending the model obtaining information to the first network function entity; or,
if the AF entity is an untrusted AF entity, sending the model obtaining information to an NEF entity, selecting, by the NEF entity, the first network function entity that serves the UE and/or that can provide the global machine learning model that satisfies the model description information, and sending the model obtaining information to the first network function entity.

17. The method according to claim 15 or 16, wherein the obtaining, from the first network function entity, the information on the first model file of the global machine learning model and sending, through the user plane, the information on the first model file of the global machine learning model to the UE comprises:
obtaining, from the first network function entity directly or through an NEF entity, the information on the first model file of the global machine learning model; and
sending, through the user plane, a model obtaining response to the UE, wherein the model obtaining response comprises the information on the first model file, and is used to obtain the first model file according to the information on the first model file.

18. A machine learning model processing method, applied to a first network function entity for providing a model, and comprising:
obtaining local model parameters of a trained local machine learning model sent by a user equipment UE, wherein the local machine learning model is obtained based on a global machine learning model trained by the first network function entity; and
updating, based on the local model parameters, the global machine learning model.

19. The method according to claim 18, wherein after the updating, based on the local model parameters, the global machine learning model, the method further comprises:
sending global model parameters of the updated global machine learning model to the UE, wherein the global model parameters are used to update the trained local machine learning model;
wherein the global model parameters are obtained by the first network function entity by updating the global machine learning model using the local model parameters sent by at least one UE.

20. The method according to claim 18, wherein before the obtaining the local model parameters of the trained local machine learning model sent by the user equipment UE, the method further comprises:
sending information on a first model file of the global machine learning model to the UE, so that the UE creates the local machine learning model according to the first model file.

21. A user equipment, comprising a memory, a transceiver, and a processor,
wherein the memory is configured to store a computer program; the transceiver is configured to send and receive data under a control of the processor; the processor is configured to read the computer program in the memory and perform following operations:
determine local training data related to a target application;
train, according to the local training data, a local machine learning model for the target application, to obtain local model parameters of the trained local machine learning model, wherein the local machine learning model is obtained based on a global machine learning model trained by a first network function entity; and
send the local model parameters to the first network function entity, wherein the local model parameters are used to update the global machine learning model.

22. The user equipment according to claim 21, wherein the processor is further configured to:
obtain, from the first network function entity, a global model parameter of the updated global machine learning model, wherein the global model parameter is used to update the trained local machine learning model;
wherein the global model parameter is obtained by the first network function entity by updating the global machine learning model using the local model parameters sent by at least one UE.

23. The user equipment according to claim 21 or 22, wherein the processor, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, wherein the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

24. The user equipment according to claim 23, wherein the processor, when obtaining, from the first network function entity, the global model parameter of the updated global machine learning model, is configured to:
receive a model update response sent by the AF entity or the AMF entity, wherein the model update response comprises information on the global model parameter of the updated global machine learning model.

25. The user equipment according to claim 21, wherein the processor, when obtaining the local machine learning model based on the global machine learning model trained by the first network function entity, is configured to:
obtain, from the first network function entity, a first model file of the global machine learning model; and
create the local machine learning model based on the first model file.

26. The user equipment according to claim 25, wherein the processor, when obtaining, from the first network function entity, the first model file of the global machine learning model, is configured to:
send, to the first network function entity, model obtaining information carrying a UE ID and/or model description information; and
obtain, from the first network function entity, information on the first model file of the global machine learning model which is provisioned based on the model obtaining information.

27. The user equipment according to claim 26, wherein the processor, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, wherein the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

28. The user equipment according to claim 26 or 27, wherein the processor, when obtaining, from the first network function entity, the first model file of the global machine learning model, is configured to:
receive a model obtaining response sent by an AF entity or an AMF entity, wherein the model obtaining response comprises the information on the first model file, and is used to obtain the first model file according to the information on the first model file.

29. An AF entity, comprising a memory, a transceiver, and a processor,
wherein the memory is configured to store a computer program; the transceiver is configured to send and receive data under a control of the processor; the processor is configured to read the computer program in the memory and perform following operations:
receive model update information carrying local model parameters sent by a UE through a user plane, wherein the local machine learning model is a global machine learning model that a first network function entity provides to the UE in advance; and
send the model update information to the first network function entity, wherein the local model parameters are used to update the global machine learning model.

30. The AF entity according to claim 29, wherein the processor is further configured to:
obtain, from the first network function entity, information on a global model parameter of the updated global machine learning model, wherein the global model parameter is used to update a trained local machine learning model; and
send, through the user plane, a model update response to the UE, wherein the model update response comprises information on the global model parameter;
wherein the global model parameter is obtained by the first network function entity by updating the global machine learning model using the local model parameters sent by at least one UE.

31. The AF entity according to claim 29, wherein the processor, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

32. The AF entity according to claim 30, wherein the processor, when obtaining, from the first network function entity, the information on the global model parameter of the updated global machine learning model, is configured to:
obtain, from the first network function entity directly or through an NEF entity, the information on the global model parameter of the updated global machine learning model.

33. The AF entity according to claim 29, wherein the processor, before receiving the model update information carrying the local model parameters sent by the UE through the user plane, is further configured to:
receive model obtaining information carrying a UE ID and/or model description information sent by the UE through the user plane;
send the model obtaining information to the first network function entity, according to the UE ID and/or the model description information; and
obtain, from the first network function entity, information on a first model file of the global machine learning model and send, through the user plane, the information on the first model file of the global machine learning model to the UE.

34. The AF entity according to claim 33, wherein the processor, when sending the model obtaining information to the first network function entity, according to the UE ID and/or the model description information, is configured to:
if the AF entity is a trusted AF entity, select the first network function entity that serves the UE and/or that can provide the global machine learning model that satisfies the model description information, and send the model obtaining information to the first network function entity; or,
if the AF entity is an untrusted AF entity, send the model obtaining information to an NEF entity, select, by the NEF entity, the first network function entity that serves the UE and/or that can provide the global machine learning model that satisfies the model description information, and send the model obtaining information to the first network function entity.

35. The AF entity according to claim 33 or 34, wherein the processor, when obtaining, from the first network function entity, the information on the first model file of the global machine learning model and sending, through the user plane, the information on the first model file of the global machine learning model to the UE, is configured to:
obtain, from the first network function entity directly or through an NEF entity, the information on the first model file of the global machine learning model; and
send, through the user plane, a model obtaining response to the UE, wherein the model obtaining response comprises the information on the first model file, and is used to obtain the first model file according to the information on the first model file.

36. A first network function entity for providing a model, comprising a memory, a transceiver, and a processor, wherein the memory is configured to store a computer program; the transceiver is configured to send and receive data under a control of the processor; the processor is configured to read the computer program in the memory and perform following operations:
obtain local model parameters of a trained local machine learning model sent by a user equipment UE, wherein the local machine learning model is obtained based on a global machine learning model trained by the first network function entity; and
update, based on the local model parameters, the global machine learning model.

37. The first network function entity for providing the model according to claim 36, wherein the processor, after updating, based on the local model parameters, the global machine learning model, is further configured to:
send a global model parameter of the updated global machine learning model to the UE, wherein the global model parameter is used to update the trained local machine learning model;
wherein the global model parameter is obtained by the first network function entity by updating the global machine learning model using the local model parameters sent by at least one UE.

38. The first network function entity for providing the model according to claim 36, wherein the processor, before obtaining the local model parameters of the trained local machine learning model sent by the user equipment UE, is further configured to:
send information on a first model file of the global machine learning model to the UE, so that the UE creates the local machine learning model according to the first model file.

39. A machine learning model processing apparatus, applied to a UE, and comprising:
an obtaining unit configured to determine local training data related to a target application;
a training unit configured to train, according to the local training data, a local machine learning model for the target application, to obtain local model parameters of the trained local machine learning model, wherein the local machine learning model is obtained based on a global machine learning model trained by a first network function entity; and
a sending unit configured to send the local model parameters to the first network function entity, wherein the local model parameters are used to update the global machine learning model.

40. The machine learning model processing apparatus according to claim 39, wherein the obtaining unit is further configured to and further comprises:
obtain, from the first network function entity, a global model parameter of the updated global machine learning model, wherein the global model parameter is used to update the trained local machine learning model;
wherein the global model parameter is obtained by the first network function entity by updating the global machine learning model using the local model parameters sent by at least one UE.

41. The machine learning model processing apparatus according to claim 39 or 40, wherein the sending unit, when sending the local model parameters to the first network function entity, is configured to:
send, through a user plane, model update information carrying the local model parameters, to an application function AF entity, so that the model update information is sent to the first network function entity through the AF entity; or,
send, through the user plane, the model update information carrying the local model parameters, to the application function AF entity, wherein the AF entity sends the model update information to the first network function entity through a network exposure function NEF entity; or,
send, through a non-access stratum, the model update information carrying the local model parameters, to an access and mobility management function AMF entity, so that the model update information is sent to the first network function entity through the AMF entity.

42. The machine learning model processing apparatus according to claim 40, wherein the obtaining unit, when obtaining, from the first network function entity, the global model parameter of the updated global machine learning model, is configured to:
receive a model update response sent by the AF entity or the AMF entity, wherein the model update response comprises information on the global model parameter of the updated global machine learning model.

43. The machine learning model processing apparatus according to claim 39, wherein the obtaining unit is further configured to obtain, from the first network function entity, a first model file of the global machine learning model;
the training unit is further configured to create the local machine learning model based on the first model file.

44. The machine learning model processing apparatus according to claim 43, wherein the obtaining unit, when obtaining, from the first network function entity, the first model file of the global machine learning model, is configured to:
send, to the first network function entity, model obtaining information carrying a UE ID and/or model description information; and
obtain, from the first network function entity, information on the first model file of the global machine learning model which is provisioned based on the model obtaining information.

45. The machine learning model processing apparatus according to claim 44, wherein the sending unit, when sending, to the first network function entity, the model obtaining information carrying the UE ID and/or the model description information, is configured to:
send, through a user plane, the model obtaining information carrying the UE ID and/or the model description information, to an AF entity, so that the model obtaining information is sent to the first network function entity through the AF entity according to the UE ID and/or the model description information; or,
send, through the user plane, the model obtaining information carrying the UE ID and/or the model description information, to the AF entity, wherein the AF entity sends the model obtaining information to the first network function entity through an NEF entity according to the UE ID and/or the model description information; or,
send, through a non-access stratum, the model obtaining information carrying the UE ID and/or the model description information, to an AMF entity, so that the model obtaining information is sent to the first network function entity through the AMF entity according to the UE ID and/or the model description information.

46. The machine learning model processing apparatus according to claim 44 or 45, wherein the obtaining unit, when obtaining, from the first network function entity, the first model file of the global machine learning model, is configured to:
receive a model obtaining response sent by an AF entity or an AMF entity, wherein the model obtaining response comprises the information on the first model file, and is used to obtain the first model file according to the information on the first model file.

47. A machine learning model processing apparatus, applied to an AF entity, and comprising:
a receiving unit configured to receive model update information carrying local model parameters sent by a UE through a user plane, wherein the local machine learning model is a global machine learning model that a first network function entity provides to the UE in advance; and
a sending unit, configured to send the model update information to the first network function entity, wherein the local model parameters are used to update the global machine learning model.

48. The machine learning model processing apparatus according to claim 47, further comprising:
an obtaining unit configured to obtain, from the first network function entity, information on a global model parameter of the updated global machine learning model, wherein the global model parameter is used to update a trained local machine learning model;
the sending unit is further configured to send, through the user plane, a model update response to the UE, wherein the model update response comprises information on the global model parameter;
wherein the global model parameter is obtained by the first network function entity by updating the global machine learning model using the local model parameters sent by at least one UE.

49. The machine learning model processing apparatus according to claim 47, wherein the sending unit, when sending the model update information to the first network function entity, is configured to:
directly send the model update information to the first network function entity if the AF entity is a trusted AF entity; or
send, through an NEF entity, the model update information to the first network function entity if the AF entity is an untrusted AF entity.

50. The machine learning model processing apparatus according to claim 48, wherein the obtaining unit, when obtaining, from the first network function entity, the information on the global model parameter of the updated global machine learning model, is configured to:
obtain, from the first network function entity directly or through an NEF entity, the information on the global model parameter of the updated global machine learning model.

51. The machine learning model processing apparatus according to claim 47, wherein before receiving the model update information carrying the local model parameters sent by the UE through the user plane, following is further comprised:
the receiving unit is further configured to receive model obtaining information carrying a UE ID and/or model description information sent by the UE through the user plane;
the sending unit is further configured to send the model obtaining information to the first network function entity, according to the UE ID and/or the model description information;
the obtaining unit is further configured to obtain, from the first network function entity, information on a first model file of the global machine learning model;
the sending unit is further configured to send, through the user plane, the information on the first model file of the global machine learning model to the UE.

52. The machine learning model processing apparatus according to claim 51, wherein the sending unit, when sending the model obtaining information to the first network function entity, according to the UE ID and/or the model description information, is configured to:
if the AF entity is a trusted AF entity, select the first network function entity that serves the UE and/or that can provide the global machine learning model that satisfies the model description information, and send the model obtaining information to the first network function entity; or,
if the AF entity is an untrusted AF entity, send the model obtaining information to an NEF entity, select, by the NEF entity, the first network function entity that serves the UE and/or that can provide the global machine learning model that satisfies the model description information, and send the model obtaining information to the first network function entity.

53. The machine learning model processing apparatus according to claim 51 or 52, wherein the obtaining unit, when obtaining, from the first network function entity, the information on the first model file of the global machine learning model and sending, through the user plane, the information on the first model file of the global machine learning model to the UE, is configured to:
obtain, from the first network function entity directly or through an NEF entity, the information on the first model file of the global machine learning model; and
send, through the user plane, a model obtaining response to the UE, wherein the model obtaining response comprises the information on the first model file, and is used to obtain the first model file according to the information on the first model file.

54. A machine learning model processing apparatus, applied to a first network function entity for providing a model, and comprising:
an obtaining unit configured to obtain local model parameters of a trained local machine learning model sent by a user equipment UE, wherein the local machine learning model is obtained based on a global machine learning model trained by the first network function entity; and
a model updating unit configured to update, based on the local model parameters, the global machine learning model.

55. The machine learning model processing apparatus according to claim 54, further comprising:
a sending unit configured to send a global model parameter of the updated global machine learning model to the UE, wherein the global model parameter is used to update the trained local machine learning model;
wherein the global model parameter is obtained by the first network function entity by updating the global machine learning model using the local model parameters sent by at least one UE.

56. The machine learning model processing apparatus according to claim 55, wherein the sending unit, before obtaining the local model parameters of the trained local machine learning model sent by the user equipment UE, is further configured to:
send information on a first model file of the global machine learning model to the UE, so that the UE creates the local machine learning model according to the first model file.

57. A processor-readable storage medium, wherein the processor-readable storage medium stores a computer program, and the computer program is used to cause the processor to execute the method according to any one of claims 1-10, 11-17 or 18-20.
